# EUROPEAN PATENT APPLICATION

(11) **EP 2 998 173 A1**
(43) Date of publication of application: **23.03.2016**
(21) Application number: 13884540.9
(22) Date of filing: 13.05.2013
(51) Int. Cl.: B60T 8/17, B60T 17/22

(54) **BRAKE DEVICE**

(71) Applicant: TOYOTA JIDOSHA KABUSHIKI KAISHA, Toyota-shi, Aichi-ken, 471-8571 (JP)
(72) Inventor: NAKAOKA Hiroshi, Toyota-shi Aichi 471-8571 (JP); OOYA Kentaro, Toyota-shi Aichi 471-8571 (JP); NIMURA Kazunori, Toyota-shi Aichi 471-8571 (JP)
(74) Representative: Winter, Brandl, Fürniss, Hübner, Röss, Kaiser, Polte - Partnerschaft mbB
(86) International application number: PCT/JP2013/063269
(87) International publication number: WO 2014/184840

(57) **Abstract**

[Summary] The hydraulic brake system 20 comprises a first actuator 110 for a regeneration coordination brake control and a second actuator 210 for maintaining the stability of a vehicle in a hydraulic pressure passage between a master cylinder 42 and a wheel cylinder 52. The first actuator 110 is controlled by a first ECU 120, and the second actuator 210 is controlled by a second ECU 220. When a failure occurs in the first actuator 110 or the first ECU 120, the second ECU 220 operates the second actuator 210 according to the amount of a brake operation, and assists braking of a wheel.

## Description

### [Technical Field]

The present invention relates to a brake apparatus applied to a vehicle comprising a regenerative braking device which generates regenerative braking force.

### [Background Art]

Conventionally, a brake apparatus applied to a vehicle comprising a regenerative braking device which generates regenerative braking force by converting a kinetic energy of a wheel into an electrical energy and collecting the electrical energy into a battery has been known. This brake apparatus comprises a disc brake unit disposed in each wheel, a hydraulic pressure control actuator which controls a hydraulic pressure of a wheel cylinder disposed in the disc brake unit, and an electronic control unit (hereafter, an electronic control unit is referred to as an ECU) which controls an operation of the hydraulic pressure control actuator, in order to generate braking force for covering shortfall of regenerative braking force with friction braking force. The hydraulic pressure control actuator comprises a power hydraulic pressure source having a pump and an accumulator and a control valve for adjusting a hydraulic pressure which the power hydraulic pressure source outputs, etc., for example. The ECU calculates target total braking force for a wheel based on the amount of a brake operation, and sets braking force obtained by subtracting regenerative braking force generated with the regenerative braking device from target total braking force as target friction braking force. Then, the operation of the hydraulic pressure control actuator is controlled so that the hydraulic pressure of the wheel cylinder follows target hydraulic pressure which is set corresponding to the target friction braking force. Such a brake control for generating regenerative braking force and friction braking force in combination is referred to as a regeneration coordination brake control.

Moreover, such a brake apparatus also has a function for maintenance of vehicle stability. For instance, the brake apparatus has a function to separately adjust the hydraulic pressure of the wheel cylinder for each wheel, in order to carry out an antilock control (referred to as ABS) which suppresses the lock of the wheel at the time of braking and secures the stability of a vehicle, a traction control (referred to as TRC) which suppresses the slip of a driving wheel at the time of an acceleration, and a vehicle posture stability control (referred to as VSC) which suppresses a side skid of a vehicle and secures the stability of a vehicle, etc.

Although a regeneration coordination brake control and vehicles stability controls (ABS, TRC, VSC, etc.) are generally carried out by one hydraulic pressure actuator and one ECU which controls the hydraulic pressure actuator, it is known that the hydraulic pressure control actuator is divided into an actuator for a regeneration coordination brake control and an actuator for vehicle stability controls, as proposed in the Patent Document 1 (PTL1) and the Patent Document 2 (PTL2).

### [Citation List]

### [Patent Literature]

[PTL1] International Publication WO2010/119889
[PTL2] Japanese Patent Application Laid-Open (kokai) No. 2000-184505

### [Summary of Invention]

However, in a conventional brake apparatus, there is a possibility that a braking function of a wheel may fall, when an actuator for a regeneration coordination brake control breaks down, or when an ECU which controls the actuator for a regeneration coordination brake control breaks down.

The present invention has been made in order to solve the above-mentioned issue, and an object of the invention is to suppress a reduction of a braking function of a wheel at the time of the above-mentioned failure.

A feature of the present invention for solving the above-mentioned problem is in that: a brake apparatus applied to a vehicle comprising a regenerative braking device (10) to generate regenerative braking force by converting a kinetic energy of a rotating wheel into an electrical energy and collecting the electrical energy to a battery comprises a master cylinder (42) which outputs a hydraulic pressure of a hydraulic fluid according to a brake operation by a driver, a wheel cylinder (52) which is disposed for each wheel and operates a friction member with the hydraulic pressure of the hydraulic fluid to generate friction braking force, a first hydraulic pressure controller (100) having a first actuator (110) which is disposed in a passage of the hydraulic fluid between said master cylinder and said wheel cylinder and can adjust the hydraulic pressure supplied to said wheel cylinder and a first electrical control unit (120) which controls an operation of said first actuator so that said first actuator outputs a hydraulic pressure which can generate target friction braking force obtained by subtracting a regenerative braking force generated by said regenerative braking device from target total braking force set up according to the amount of a brake operation, a second hydraulic pressure controller (200) having a second actuator (210) which is disposed in a passage of the hydraulic fluid between said first actuator and said wheel cylinder and can fluctuate the hydraulic pressure of said wheel cylinder and a second electrical control unit (220) which operates said second actuator and individually controls the hydraulic pressure of each wheel cylinder so as to maintain a stability of the vehicle when the stability of the vehicle needs to be maintained, and a communication connection means (300) to connect said first electrical control unit and said second electrical control unit so that they can communicate each other, wherein: said second electrical control unit comprises: a failure detection means (S51) to detect a failure of said first hydraulic pressure controller through said communication connection means, and a backup means (S46) to operate said second actuator according to said amount of the brake operation to assist braking of said wheel when the failure of said first hydraulic pressure controller is detected.

The present invention comprises the first hydraulic pressure controller and the second hydraulic pressure controller, carries out a regeneration coordination brake control with the first hydraulic pressure controller, and carries out a vehicle stability control with the second hydraulic pressure controller. The first hydraulic pressure controller comprises the first actuator which is disposed in the passage of the hydraulic fluid between the master cylinder and the wheel cylinder and can adjust the hydraulic pressure supplied to the wheel cylinder and the first electrical control unit which controls the operation of the first actuator. The first electrical control unit controls the operation of the first actuator so as to output the hydraulic pressure which can generate the target friction braking force obtained by subtracting the regenerative braking force generated with the regenerative braking device from the target total braking force set up according to the amount of a brake operation, from the first actuator. The amount of a brake operation may be any physical quantity which changes according to a brake operation by a driver, and can be detected and acquired by detecting the stroke of a brake pedal, the hydraulic pressure of the master cylinder, and the stepping-on force of a pedal, etc., for instance. Moreover, the first actuator comprises a power hydraulic pressure source and a control valve which adjusts the hydraulic pressure outputted by the power hydraulic pressure source, for example, and the control valve is controlled by the first electrical control unit so that the hydraulic pressure outputted from the first actuator becomes a hydraulic pressure which can generate the target friction braking force by the operation of the wheel cylinder. Thereby, a wheel can generate the target total braking force.

The second hydraulic pressure controller comprises the second actuator which is disposed, separately from the first hydraulic pressure controller, in the passage of the hydraulic fluid between the first actuator and the wheel cylinder and can fluctuate the hydraulic pressure of the wheel cylinder and the second electrical control unit which controls the operation of the second actuator. The second electrical control unit operates the second actuator to control the hydraulic pressure of each wheel cylinder individually so as to maintain the stability of the vehicle, when a need to maintain the stability of the vehicle arises. For instance, the second actuator comprises a pressure-increasing means which pressurizes the hydraulic fluid of the wheel cylinder and a pressure-reducing means which decompress (depressurizes) the hydraulic fluid of the wheel cylinder, and supplies the hydraulic pressure outputted from the first actuator to each wheel cylinder as it is when it is not in operation, and individually adjust the hydraulic pressure of each wheel cylinder using the pressure-increasing means and the pressure-reducing means when it is in operation. Thereby, the stability of the vehicle can be maintained.

The first electrical control unit and the second electrical control unit are connected with of each other so that they can communicate with each other through the communication connection means. As the communication connection means, a CAN communication system with which various kinds of information are delivered and received among controllers disposed in a vehicle, for example.

The second electrical control unit comprises the failure detection means and the backup means. The failure detection means detects a failure of the first hydraulic pressure controller through the communication connection means. When a failure of the first hydraulic pressure controller is detected, the backup means operates the second actuator according to the amount of a brake operation, and assists braking of the wheel. When the first hydraulic pressure controller breaks down, the first actuator outputs the hydraulic pressure outputted from the master cylinder to the second actuator as it is. In this case, the braking force of the wheel is insufficient. Then, the backup means operates the second actuator, supplies the hydraulic pressure according to the amount of the brake operation to the wheel cylinder, and assists braking of the wheel.

Thereby, in accordance with the present invention, even when the first hydraulic pressure controller breaks down, a reduction of the braking function of a wheel can be suppressed. Therefore, the burden of a brake operation on a driver can be reduced.

Another feature of the present invention is in that said second actuator comprises a pressure sensor (125) which detects the hydraulic pressure outputted from said first actuator and said backup means operates said second actuator based on the hydraulic pressure detected by said pressure sensor to assist braking of said wheel.

In the present invention, the second actuator comprises the pressure sensor which detects the hydraulic pressure outputted from the first actuator. This pressure sensor outputs a signal according to the amount of a brake operation, when the first hydraulic pressure controller is out of order. The backup means operates a second actuator based on the hydraulic pressure detected by this pressure sensor, and assists braking of the wheel. Therefore, in accordance with the present invention, the second hydraulic pressure controller by itself can detect the amount of a brake operation by a driver and can carry out a backup control.

Another feature of the present invention is in that the brake apparatus comprises a stroke sensor (124) which detects the stroke of a brake pedal that the driver operates and said stroke sensor outputs a detection signal to said first electrical control unit and said second electrical control unit and is provided with a power supply from said first electrical control unit and said second electrical control unit.

Although the amount of a brake operation can be detected with the stroke of a brake pedal, the hydraulic pressure of a master cylinder, etc., at the start of stepping on a brake pedal, the increase in the hydraulic pressure of a master cylinder is small compared with the increase in a stroke. That is, the hydraulic pressure of a master cylinder rises after a brake pedal being stepped on to some extent. For this reason, when detecting a brake operation using the hydraulic pressure of a master cylinder, it is supposed that a delay in the control at the start of stepping on a brake pedal occurs and a feeling of strangeness is given to a driver. Then, in the present invention, the brake apparatus comprises the stroke sensor and the detection signal of this stroke sensor is outputted to the first electrical control unit and the second electrical control unit. Thereby, both two electrical control units can perform a hydraulic pressure control successfully. Moreover, since the stroke sensor is provided with a power supply from the first electrical control unit and the second electrical control unit, even when the power supply line for receiving a power supply from one of the electrical control units is disconnected, the power supply to the stroke sensor can be maintained.

Another feature of the present invention is in that said stroke sensor has two sensor elements which detect said stroke and two signal output terminals (Tout1, Tout2) which output the detection signal of each sensor element, and one of the output terminals is electrically connected to said first electrical control unit, and the other one of the signal output terminals is electrically connected to said second electrical control unit.

In the present invention, the stroke sensor comprises two sensor elements and two signal output terminals which output the detection signal of each sensor element. And the signal output terminal of one sensor element is electrically connected to the first electrical control unit, and the signal output terminal of the other sensor element is electrically connected to the second electrical control unit. When the stroke sensor is normal, the detection values of two sensor elements will become the same. In the present invention, since the first electrical control unit and the second electrical control unit are connected with each other in a mutually communicable manner, the detection values of two sensor elements can be compared and the existence of a failure in the stroke sensor can be judged based on this comparison result. For instance, one of the electrical control units may acquire the detection value of the other one of the electrical control units through the communication connection means and judge the existence of a failure in the stroke sensor based on a comparison of the two detection values. Conventionally, since a stroke sensor used for a brake apparatus has two sensor elements and two signal output terminals like this, the present invention can perform the above-mentioned failure judgment using the stroke sensor which has been conventionally used as it is (without increasing the number of signal output terminals).

Another feature of the present invention is in that the brake apparatus comprises a power feeding control means (S102, S111, S112) which temporarily stops a power supply from either one of said first electrical control unit and said second electrical control unit to said stroke sensor, and a disconnection investigation means (S104) which conducts a disconnection investigation of a power supply connection line for feeding a power supply from the other one of said electrical control units to said stroke sensor based on a detection signal inputted into said other one of said electrical control units, in a status that the power supply from one of said electrical control units to said stroke sensor has been stopped.

In a configuration wherein two electrical control units feed power-supply to a stroke sensor, even when a power supply connection line (a power supply line and an earth line) for feeding power supply from one of the electrical control units to the stroke sensor, disconnection of the power supply connection line cannot be detected since the stroke sensor operates normally. Then, the present invention comprises the power feeding control means and the disconnection investigation means in order to be able to detect disconnection of the power supply connection line.

The power feeding control means temporarily stops a power supply from either one of said first electrical control unit and said second electrical control unit to said stroke sensor. For instance, the first electrical control unit transmits an instruction for temporarily stopping a power supply to the stroke sensor to the second electrical control unit through the communication connection means. Thereby, the power-supply from the second electrical control unit to the stroke sensor is stopped temporarily. Although the second electrical control unit corresponds to one of the electrical control units and the first electrical control unit corresponds to the other one of the electrical control units in this example, the first electrical control unit can be used as the one of the electrical control units and the second electrical control unit can be used as the other one of the electrical control units.

In a status that the power supply from one of the electrical control units to the stroke sensor has been stopped, the disconnection investigation means conducts the disconnection investigation of the power supply connection line through which power supply is fed from the other one of the electrical control units to the stroke sensor based on the detection signal inputted into the other one of the electrical control units. In this case, when the power supply connection line through which power supply is fed from the other one of the electrical control units to the stroke sensor is disconnected, it will be in a status that the power supply is not fed to the stroke sensor, and the detection signal of the stroke sensor will show an abnormal value. A disconnection investigation of a power supply connection line can be conducted using this. Therefore, in accordance with the present invention, disconnection of the power supply connection line to the stroke sensor can be inspected successfully.

Another feature of the present invention is in that the brake apparatus comprises a power feeding control means for an incommunicable situation (S123), which temporarily stops a power supply from either one of said first electrical control unit and said second electrical control unit to said stroke sensor when a communication between said first electrical control unit and said second electrical control unit becomes impossible and an operation stop judgment means (S124, S125, S127) which judges whether the operation of the other one of said electrical control units has stopped based on a detection signal inputted into the one of said electrical control units in a status that the power supply from the one of said electrical control units to said stroke sensor has been stopped.

In a configuration wherein the first electrical control unit and the second electrical control unit are connected with each other in a mutually communicable manner, when the communication between both electrical control units becomes impossible, it cannot be distinguished whether the cause is a failure of the communication connection means or an operation stop of the electrical control unit which serves as a communication partner. Then, the present invention comprises the power feeding control means for an incommunicable situation and the operation stop judgment means at the time of communication impossible, in order to distinguish the cause of the failure.

The power feeding control means for an incommunicable situation temporarily stops the power supply from either one of the first electrical control unit and the second electrical control unit to the stroke sensor, when the communication between the first electrical control unit and the second electrical control unit becomes impossible. For instance, the first electrical control unit temporarily stop power supply from itself to the stroke sensor. Thereby, the power supply from the first electrical control unit to the stroke sensor is stopped temporarily. Although the first electrical control unit corresponds to the one of the electrical control units and the second electrical control unit corresponds to the other one of the electrical control units in this example, the second electrical control unit can be used as the one of the electrical control units and the first electrical control unit can be used as the other one of the electrical control units.

In a status that the power supply from one of the electrical control units to the stroke sensor has been stopped, an operation stop judgment means judges whether the operation of the other one of the electrical control units has stopped based on the detection signal inputted into the one of the electrical control units. When the other one of the electrical control units has stopped its operation, the power supply from the other one of the electrical control units to the stroke sensor must have been stopped. In this case, the detection signal of the stroke sensor inputted into the one of the electrical control units departs from a proper range. Therefore, the cause why the communication became impossible can be presumed to be in that the other one of the electrical control units has stopped its operation, based on this detection signal.

On the contrary, when the other one of the electrical control units is operating normally, the power supply from the other one of the electrical control unit to the stroke sensor should be being performed. In this case, the detection signal of the stroke sensor, which is inputted into the one of the electrical control units, falls within a proper range. Therefore, based on this detection signal, the cause why the communication became impossible can be presumed to be a failure of the communication connection means.

As a result, in accordance with the present invention, when the communication between the first electrical control unit and the second electrical control unit becomes impossible, it can be distinguished whether the cause is a failure of a communication connection means or an operation stop of the electrical control unit which serves as a communication partner. Therefore, a suitable treatment according to the discrimination result of the cause can be carried out.

In addition, in the above-mentioned explanation, in order to help understanding of invention, reference signs used in embodiments are attached in parenthesis to configurations of the present invention corresponding to the embodiments, but each constituent elements of the present invention are not limited to the embodiments specified with the above-mentioned reference signs.

### [Brief Description of Drawings]

Fig. 1 is a schematic configuration diagram of a regeneration coordination brake control apparatus according to the present embodiment.
Fig. 2 is a schematic configuration diagram of a hydraulic brake system.
Fig. 3 is a flowchart for showing a brake control routine.
Fig. 4 is a flowchart for showing a failure judgment flag setting routine.
Fig. 5 is a flowchart for showing a backup control routine.
Fig. 6 is a diagram for showing a power supply system and a signal output system for a stroke sensor.
Fig. 7 is a flowchart for showing a disconnection investigation routine.
Fig. 8 is a flowchart for showing a communication error cause distinguishing routine.
Fig. 9 is a schematic configuration diagram of a hydraulic brake system as a modification.

### [Description of Embodiments]

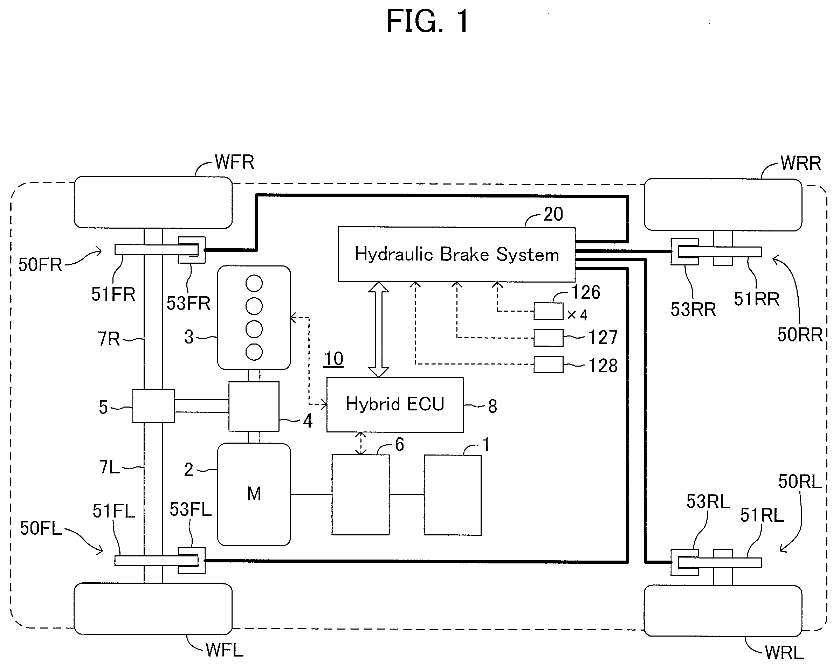

Hereafter, a brake apparatus for a vehicle according to one embodiment of the present invention will be explained using drawings. Fig. 1 is a schematic structure of a regeneration coordination brake apparatus comprising a brake apparatus according to the present embodiment.

The brake apparatus according to the present embodiment is applied to a front-wheel-drive-type hybrid vehicle comprising a hybrid system 10 which controls two kinds of power sources, i.e., a motor 2 to which an electric power is supplied from a battery 1 and a gasoline engine 3. In the hybrid system 10, the motor 2 can be used not only as a driving power source, but regenerative braking force can be generated on front, left and right wheels WFL and WFR by using a kinetic energy of a wheel to rotate the motor 2 to generate electricity and collecting the generated electric power in the battery 1. The hybrid vehicle comprises a hydraulic brake system 20 which generates friction braking force on the front, left and right wheels WFL and WFR and rear, left and right wheels WRL and WRR so that the insufficiency of regenerative braking force generated in the hybrid system 10 is compensated. This hydraulic brake system 20 corresponds to a brake apparatus according to the present invention.

In the hybrid system 10, an output shaft of the gasoline engine 3 and an output shaft of the motor 2 are connected with a planetary gear 4. Rotation of an output shaft of the planetary gear 4 is transmitted to left and right axle shafts 7L and 7R for the front wheels through reduction gears 5 and, thereby, the left and right front wheels WFL and WFR are driven to rotate. The motor 2 is connected to the battery 1 through an inverter 6.

The drive control of the motor 2 and the gasoline engine 3 is carried out by a hybrid electronic control unit 8 (referred to as a hybrid ECU8). The hybrid ECU8 is a controller which comprises a microcomputer as its principal part and has an input/output interface, a drive circuit, a communication interface, etc., and it is connected with a the hydraulic brake system 20 in a mutually communicable manner. The hybrid ECU8 carries out the drive control of the gasoline engine 3 and the motor 2 based on the signal from the sensor (not shown) which detects the amount of stepping-on of an accelerator pedal, a position of a shift lever, the charge status of the battery, etc.

Moreover, when a regenerative braking demand instruction transmitted from the hydraulic brake system 20 is received, the hybrid ECU8 operates the motor 2 as a dynamo to generate regenerative braking force. That is, by transmitting a kinetic energy of a rotating wheel to the output shaft of the motor 2 through the axle shafts 7L and 7R for front wheels, the reduction gears 5, and the planetary gear 4 to rotate the motor 2, the motor 2 is made to generate electricity, and the battery 1 is made to collect the generated electric powers through the inverter 6. Braking torque generated by the motor 2 at this time is used as braking torque for the front wheels WFL and WFR.

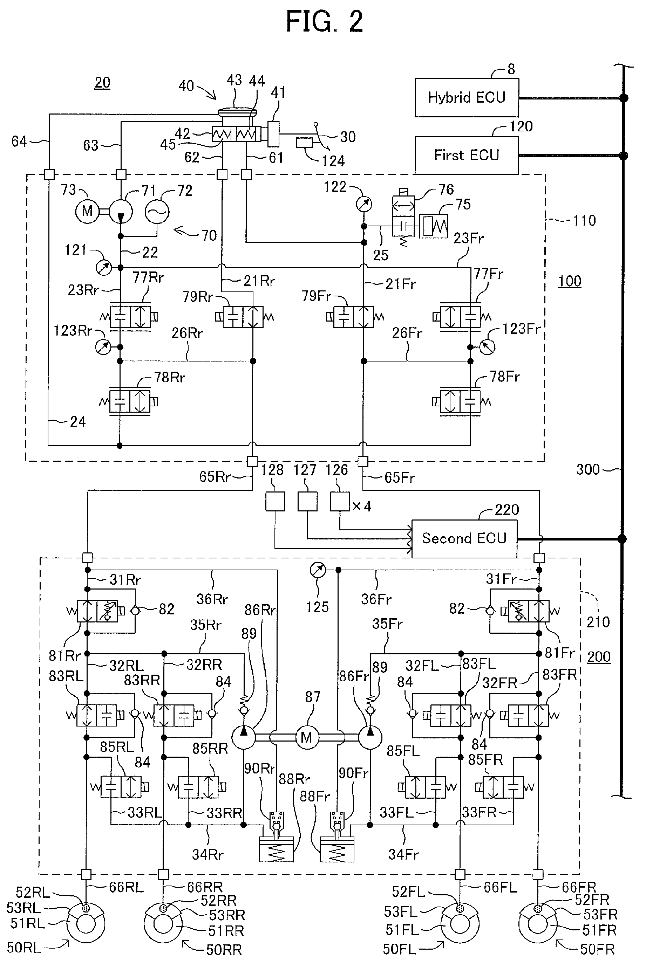

As shown in Fig. 2, the hydraulic brake system 20 comprises a brake pedal 30, a master cylinder unit 40, a first hydraulic pressure control unit 100, a second hydraulic pressure control unit 200, and disc brake units 50FR, 50FL, 50RR and 50RL disposed in each wheel, respectively. The first hydraulic pressure control unit 100 comprises a first actuator 110 for hydraulic pressure control (hereafter, referred to as a first actuator 110) and a first electronic control unit 120 (hereafter, referred to as a first ECU120). The second hydraulic pressure control unit 200 comprises a second actuator 210 for hydraulic pressure control (hereafter, referred to as a second actuator 210) and a second electronic control unit 220 (hereafter, referred to as a second ECU220). The first hydraulic pressure control unit 100 corresponds to the first hydraulic pressure controller according to the present invention, and the second hydraulic pressure control unit 200 corresponds to the second hydraulic pressure controller according to the present invention. The first hydraulic pressure control unit 100 and the second hydraulic pressure control unit 200 are disposed separately from each other. The disc brake units 50FR, 50FL, 50RR and 50RL comprise brake disc rotors 51 FR, 51 FL, 51 RR and 51 RL, and brake calipers 53FR, 53FL, 53RR and 53RL. The brake calipers 53FR, 53FL, 53RR and 53RL are provided with wheel cylinders 52FR, 52FL, 52RR and 52RL.

In the present specification, "FL" is given to a reference sign for a member relevant to braking of a front left wheel, "FR" is given to a reference sign for a member relevant to braking of a front right wheel, "RL" is given to a reference sign for a member relevant to braking of a rear left wheel, and "RR" is given to a reference sign for a member relevant to braking of a rear right wheel. Moreover, "Fr" is given to a reference sign for a member relevant to braking of left and right front wheels, and "Rr" is given to a reference sign for a member relevant to braking of left and right rear wheels. Moreover, when a wheel location does not need to be pinpointed in an explanation, "FL", "FR", "RL", "RR", "Fr" and "Rr" may be omitted.

Each wheel cylinder 52 is connected to the second actuator 210 disposed in the second hydraulic pressure control unit 200, and the hydraulic pressure of the hydraulic fluid supplied from the second actuator 210 is transmitted. Each wheel cylinder 52 is operated with the hydraulic pressure of the supplied hydraulic fluid, pushes a brake pad (friction member) against a brake disc rotor 51 rotating along with a wheel W, and generates braking force at the wheel W.

The master cylinder unit 40 comprises a booster 41, a master cylinder 42, and a master reservoir 43. The booster 41 assists stepping-on operation force on the brake pedal 30 at a predetermined rate using air pressure (negative pressure) in an intake pipe at the time of an operation of an engine which is not shown, and transmits the assisted operation force to the master cylinder 42, for example. The master cylinder 42 comprises a first pressure-increasing chamber 44 and a second pressure-increasing chamber 45. The master cylinder 42 pressurizes the hydraulic fluid by a pressure-increasing piston moving forward with the assisted stepping-on operation force of the brake pedal 30 and generates independent master cylinder pressure in the first pressure-increasing chamber 44 and the second pressure-increasing chamber 45, respectively. The first pressure-increasing chamber 44 supplies the generated master cylinder pressure to the first actuator 110 through a first master piping 61. The second pressure-increasing chamber 45 supplies the generated master cylinder pressure to the first actuator 110 through a second master piping 62. The master cylinder pressure of the first pressure-increasing chamber 44 and the master cylinder pressure of the second pressure-increasing chamber 45 become an equal value. The master reservoir 43 is disposed in the upper part of the master cylinder 42, and stores the hydraulic fluid with an atmospheric pressure. The master cylinder 42 is configured so that the first pressure-increasing chamber 44 and the second pressure-increasing chamber 45 communicate with the master reservoir 43 while the stepping-on operation of the brake pedal 30 is released and the pressure-increasing piston is moving backward. Moreover, the master reservoir 43 is connected to the first actuator 110 through a supply piping 63 and a return piping 64.

The first actuator 110 comprises a power hydraulic pressure generator 70. The power hydraulic pressure generator 70 comprises a pump 71 and an accumulator 72. An intake of the pump 71 is connected to the supply piping 63, an exhaust of the pump 71 is connected to the accumulator 72, and the pump 71 pressurizes the hydraulic fluid by driving a motor 73. The accumulator 72 converts pressure energy of the hydraulic fluid pressurized by the pump 71 into pressure energy of sealed gas, such as nitrogen, and stores it.

The first actuator 110 comprises a main passage 21 Fr connected to the first master piping 61, a main passage 21 Rr connected to the second master piping 62, a main hydraulic pressure source passage 22 which is a passage where the power hydraulic pressure generator 70 outputs high hydraulic pressure, a branch hydraulic pressure source passage 23Fr and a branch hydraulic pressure source passage 23Rr which are disposed by branching into two from the main hydraulic pressure source passage 22, and a return passage 24 connected to the return piping 64. The main passage 21 Fr is connected to the second actuator 210 through a connection piping 65Fr. The main passage 21 Rr is connected to the second actuator 210 through a connection piping 65Rr.

In the middle of the main passage 21 Fr, a master cut valve 79Fr is disposed. In the middle of the main passage 21 Rr, a master cut valve 79Rr is disposed. The master cut valve 79Fr and the master cut valve 79Rr are normally-open electromagnetic on-off valves which will be in a closed status only during energization of a solenoid. Circulation of the hydraulic fluid between the first pressure-increasing chamber 44 of the master cylinder 42 and the second actuator 210 is intercepted when the master cut valve 79Fr is in a closed status, and bidirectional circulation of the hydraulic fluid between the first pressure-increasing chamber 44 and the second actuator 210 is permitted when the master cut valve 79Fr is in an opened status. Similarly, circulation of the hydraulic fluid between the second pressure-increasing chamber 45 of the master cylinder 42 and the second actuator 210 is intercepted when the master cut valve 79Rr is in a closed status, and bidirectional circulation of the hydraulic fluid between the second pressure-increasing chamber 45 and the second actuator 210 is permitted when the master cut valve 79Rr is in an opened status.

Moreover, a simulator passage 25 branched from the upstream side of the master cut valve 79Fr is disposed in the main passage 21 Fr. A stroke simulator 75 is connected to the simulator passage 25 through a simulator cut valve 76. The simulator cut valve 76 is a normally-closed electromagnetic on-off valve which will be in an opened status only during energization of a solenoid. Circulation of the hydraulic fluid between the main passage 21 Fr and the stroke simulator 75 is intercepted when the simulator cut valve 76 is in a closed status, and bidirectional circulation of the hydraulic fluid between the main passage 21 Fr and the stroke simulator 75 is permitted when the simulator cut valve 76 is in an opened status.

When the simulator cut valve 76 is in an opened status, the stroke simulator 75 introduces the hydraulic fluid of the quantity according to the amount of a brake operation into its interior to make a stroke operation of the brake pedal 30 possible, and generates opposing force according to the amount of a pedal operation to make brake operation feeling for a driver excellent.

A pressure-increasing linear control valve 77Fr is connected to the upstream side of the branch hydraulic pressure source passage 23Fr, and a pressure-reducing linear control valve 78Fr is connected to the downstream side thereof. At a part of the branch hydraulic pressure source passage 23Fr, which is on the downstream side of the pressure-increasing linear control valve 77Fr and on the upstream side of the pressure-reducing linear control valve 78Fr, a pressure control passage 26Fr is disposed by branching therefrom. The other end of this pressure control passage 26Fr is connected to the downstream side of master cut valve 79Fr in the main passage 21Fr. Moreover, the downstream side of the pressure-reducing linear control valve 78Fr is connected to the return passage 24.

Similarly, a pressure-increasing linear control valve 77Rr is connected to the upstream side of the branch hydraulic pressure source passage 23Rr, and a pressure-reducing linear control valve 78Rr is connected to the downstream side thereof. At a part of the branch hydraulic pressure source passage 23Rr, which is on the downstream side of the pressure-increasing linear control valve 77Rr and on the upstream side of the pressure-reducing linear control valve 78Rr, a pressure control passage 26Rr is disposed by branching therefrom. The other end of this pressure control passage 26Rr is connected to the downstream side of master cut valve 79Rr in the main passage 21 Rr. Moreover, the downstream side of the pressure-reducing linear control valve 78Rr is connected to the return passage 24. In addition, in the hydraulic brake system 20, the side of the master cylinder 42 is referred to as the upstream side, and the side of the wheel cylinder 52 or the master reservoir 43, and the side of a pressure control reservoir 88 are referred to as the downstream side.

The pressure-increasing linear control valves 77Fr and 77Rr and pressure-reducing linear control valves 78Fr and 78Rr are normally-closed electromagnetic linear control valves. These valves maintain a closed status by valve closing force (f1 - f2) that is a difference between force f1 with which a spring energizes a valve element in a closing direction and hydraulic pressure force f2 with which the valve element is energized in an opening direction by pressure difference between the upstream side and the downstream side, and open at a divergence according to the balance of forces which act on the valve element when electromagnetic force for opening the valve element generated by the energization to a solenoid exceeds this closing force. Therefore, by controlling the amount of energization to the solenoid (current value), the divergence of the valve elements can be adjusted and the hydraulic pressure in the pressure control passage 26 can be changed continuously.

Moreover, the first actuator 110 comprises an accumulator pressure sensor 121, a master pressure sensor 122, a control pressure sensor 123Fr, and a control pressure sensor 123Rr. The accumulator pressure sensor 121 outputs a detection signal showing the hydraulic pressure of the main hydraulic pressure source passage 22, i.e., the hydraulic pressure which the power hydraulic pressure generator 70 outputs. The master pressure sensor 122 outputs a detection signal showing the hydraulic pressure supplied from the first pressure-increasing chamber 44 of the master cylinder 42. The control pressure sensor 123Fr outputs a detection signal showing the hydraulic pressure in the pressure control passage 26Fr, i.e., the hydraulic pressure adjusted by the pressure-increasing linear control valve 77Fr and the pressure-reducing linear control valve 78Fr. The control pressure sensor 123Rr outputs a detection signal showing the hydraulic pressure in the pressure control passage 26Rr, i.e., the hydraulic pressure adjusted by the pressure-increasing linear control valve 77Rr and the pressure-reducing linear control valve 78Rr.

Next, the second actuator 210 will be explained. The second actuator 210 comprises a main passage 31 Fr connected to the connection piping 65Fr, a main passage 31 Rr connected to the connection piping 65Rr, an individual passage 32FR and an individual passage 32FL which are disposed by branching into two from the main passage 31 Fr, and an individual passage 32RR and an individual passage 32RL which are disposed by branching into two from the main passage 31 Rr. The individual passage 32FR is connected to the wheel cylinder 52FR through the individual piping 66FR, and the individual passage 32FL is connected to the wheel cylinder 52FL through the individual piping 66FL. The individual passage 32RR is connected to the wheel cylinder 52RR through the individual piping 66RR, and the individual passage 32RL is connected to the wheel cylinder 52RL through the individual piping 66RL.

In the middle of the main passage 31 Fr, a main cut valve 81 Fr is disposed. In the middle of the main passage 31 Rr, a main cut valve 81 Rr is disposed. The main cut valves 81 Fr and 81 Rr are normally-open electromagnetic valves which maintain an opened status while a solenoid is not being energized, and they are control valves which open at a divergence (pressure difference status) according to a differential pressure between the upstream side and downstream side of a valve element by energization to the solenoid. The main cut valves 81 Fr and 81 Rr not only can close the valve element, but also can control the differential pressure which is obtained by subtracting the downstream pressure from the upstream pressure, by controlling the amount of energization to the solenoid.

Moreover, a check valve 82 is disposed in parallel with the main cut valve 81 Fr and the main cut valve 81 Rr in the main passage 31 Fr and the main passage 31 Rr. Each check valve 82 bypasses the main cut valves 81 to permits a flow from the upstream side to the downstream side of the main cut valves 81, and intercepts a flow in the opposite direction. The individual passage 32FR, the individual passage 32FL, the individual passage 32RR and the individual passage 32RL are provided with a pressure-increasing valve 83FR, a pressure-increasing valve 83FL, a pressure-increasing valve 83RR and a pressure-increasing valve 83RL, respectively. Each pressure-increasing valve 83 is a normally-open electromagnetic on-off valve which will be in a closed status only during energization of a solenoid. Moreover, a check valve 84 is disposed in parallel with the pressure-increasing valve 83FR, the pressure-increasing valve 83FL, the pressure-increasing valve 83RR and the pressure-increasing valve 83RL in the individual passage 32FR, the individual passage 32FL, the individual passage 32RR and the individual passage 32RL. Each check valve 84 bypasses the pressure-increasing valve 83 to permit a flow from the downstream side to the upstream side of the pressure-increasing valve 83, and intercepts a flow in the opposite direction.

In the individual passage 32FR, the individual passage 32FL, the individual passage 32RR and the individual passage 32RL, an individual reservoir passage 33FR, an individual reservoir passage 33FL, an individual reservoir passage 33RR and an individual reservoir passage 33RL branch are disposed by branching from the downstream side of the pressure-increasing valve 83FR, the pressure-increasing valve 83FL, the pressure-increasing valve 83RR and the pressure-increasing valve 83RL. The individual reservoir passage 33FR, the individual reservoir passage 33FL, the individual reservoir passage 33RR and the individual reservoir passage 33RL are provided with a pressure-reducing valve 85FR, a pressure-reducing valve 85FL, a pressure-reducing valve 85RR and a pressure-reducing valve 85RL. Each pressure-reducing valve 85 is a normally-closed electromagnetic on-off valve which will be in an opened status only during energization of a solenoid. The individual reservoir passage 33FR and the individual reservoir passage 33FL are connected to the reservoir passage 34Fr. The individual reservoir passage 33RR and the individual reservoir passage 33RL are connected to the reservoir passage 34Rr.

The pressure control reservoir 88Fr is connected to the reservoir passage 34Fr. Moreover, the pressure control reservoir 88Rr is connected to the reservoir passage 34Rr. Therefore, when the pressure-reducing valves 85FR and 85FL are in an opened status, the hydraulic fluid of the wheel cylinders 52FR and 52FL can be returned to the pressure control reservoir 88Fr to depressurize the hydraulic pressure of the wheel cylinders 52FR and 52FL. Moreover, when the pressure-reducing valves 85RR and 85RL are in an opened status, the hydraulic fluid of the wheel cylinders 52RR and 52RL can be returned to the pressure control reservoir 88Rr to depressurize the hydraulic pressure of the wheel cylinders 52RR and 52RL.

One end of the pump passage 35Fr is connected to the reservoir passage 34Fr. The other end of the pump passage 35Fr is connected to the individual passages 32FR and 32FL. Similarly, one end of the pump passage 35Rr is connected to the reservoir passage 34Rr. The other end of the pump passage 35Rr is connected to the individual passages 32RR and 32RL. A pump 86Fr is disposed in the middle of the pump passage 35Fr, and a pump 86Rr is disposed in the middle of the pump passage 35Rr. The pump 86Fr pumps up the hydraulic fluid stored in the pressure control reservoir 88Fr and supplies it to the individual passages 32FR and 32FL. The pump 86Rr pumps up the hydraulic fluid stored in the pressure control reservoir 88Rr and supplies it to the individual passages 32RF and 32RL. A check valve 89 is disposed on the discharge side of each of the pumps 86Fr and 86Rr. Each check valve 89 is a valve which opens when the pressure difference between its upstream side (pump 86 side) and its downstream side is a predetermined pressure or more to permit a flow of the hydraulic fluid only in the discharge direction of the pump 86.

One end of a supply passage 36Fr is connected to a location which is on the upstream side rather than the main cut valves 81 Fr in the main passage 31 Fr. The other end of the supply passage 36Fr is connected to the pressure control reservoir 88Fr through a regulating valve 90Fr. Similarly, one end of a supply passage 36Rr is connected to a location which is on the upstream side rather than the main cut valves 81 Rr in the main passage 31 Rr. The other end of the supply passage 36Rr is connected to the pressure control reservoir 88Rr through a regulating valve 90Rr. Each regulating valve 90 is disposed in the upper part of the pressure control reservoir 88, and switches between an opened status and a closed status by a valve element moving according to the location of a piston disposed in the interior of the pressure control reservoir 88. This piston strokes according to the quantity of the hydraulic fluid stored in the pressure control reservoir 88. Therefore, the regulating valve 90 are opened only when the amount of the hydraulic fluid in the pressure control reservoir 88 is below a set amount, and a flow of the hydraulic fluid from the first actuator 110 to the pressure control reservoir 88 is permitted. Thereby, a flow of the hydraulic fluid from the first actuator 110 to the pressure control reservoir 88 is permitted when the hydraulic fluid needs to be supplied to the pressure control reservoir 88, and a flow of the hydraulic fluid from the first actuator 110 to the pressure control reservoir 88 is prevented when the hydraulic fluid does not need to be supplied to the pressure control reservoir 88.

The second actuator 210 comprises an upstream pressure sensor 125. The upstream pressure sensor 125 outputs a detection signal showing the hydraulic pressure in the main passage 31 Fr.

Next, the first ECU120 disposed in the first hydraulic pressure control unit 100 and the second ECU220 which are disposed in the second hydraulic pressure control unit 200 will be explained. The first ECU120 controls an operation of the first actuator 110, and does not control an operation of the second actuator 210. On the other hand, the second ECU220 controls an operation of the second actuator 210, and does not control an operation of the first actuator 110. Although the first ECU120 and the first actuator 110 are assembled as one unit in the present embodiment, they may be disposed individually, and the first ECU120 and the first actuator 110 may be configured as a group (any group with a master-servant relationship in their control). Moreover, also as for the second ECU220 and the second actuator 210, although they are assembled as one unit in the present embodiment, they may be disposed individually, and second the ECU220 and the second actuator 210 may be configured as a group (any group with a master-servant relationship in their control).

The first ECU120 comprises a microcomputer as its principal part and has a motor drive circuit, an input/output interface to which various sensor signals are inputted, a drive circuit, a communication interface, etc. All the electromagnetic valves disposed in the first actuator 110 are connected to the first ECU120, and its opening-and-closing status and a divergence are controlled by a solenoid drive signal outputted from the first ECU120. Moreover, the motor 73 disposed in the power hydraulic pressure generator 70 is also connected to first ECU120 and a drive control thereof is carried out by a motor-drive signal outputted from the first ECU120.

Moreover, the first ECU120 is inputted detection signals outputted from the accumulator pressure sensor 121, the master pressure sensor 122, the control pressure sensors 123Fr and 123Rr which are sensors disposed in the first actuator 110, and detects an accumulator pressure Pacc, a master pressure Pmas, a control pressure PFr and a control pressure PRr. Moreover, a stroke sensor 124 disposed in the brake pedal 30 is connected to the first ECU120. The stroke sensor 124 detects a pedal stroke showing the amount of stepping-on of the brake pedal 30 (operation amount), and outputs a signal showing the detected pedal stroke Sp to the first ECU120. In addition, although the stroke sensor 124 comprises two sensor elements in its interior and outputs two detection signals detected by each sensor element in total, the first ECU120 shall treat one of the two detection values or the average value of the two detection values as the pedal stroke Sp in the present embodiment. In a modification which will be mentioned later, one of the two detection signals is inputted into the first ECU120, and the other is inputted into the second ECU220.

Moreover, the first ECU120 comprises the communication interface, and has a function to be connected to a CAN (Controller Area Network) communication line 300 of a CAN communication system disposed in a vehicle through this communication interface and deliver and receive various kinds of vehicle information. An ECU for a vehicle control including the second ECU220 and the hybrid ECU8 is connected to this CAN communication line 300.

The first ECU120 stops the energization to a solenoid of each electromagnetic valve in a status that any brake pedal operation is not performed. For this reason, the master cut valves 79Fr and 79Rr are made into an opened status, and the pressure-increasing linear control valves 77Fr and 77Rr, the pressure-reducing linear control valves 78Fr and 78Rr, and the simulator cut valve 76 are made into a closed status. Moreover, in a status that a brake pedal operation is performed, the first ECU120 makes the master cut valves 79Fr and 79Rr into a closed status, and makes the simulator cut valve 76 into an opened status. And, as will be mentioned later, the first ECU120 sets up a front wheel target hydraulic pressure PFr* and a rear wheel target hydraulic pressure PRr*, and controls the energization of the pressure-increasing linear control valve 77Fr and the pressure-reducing linear control valve 78Fr so that the control pressure PFr detected by the control pressure sensor 123Fr becomes equal to the front wheel target hydraulic pressure PFr*. Moreover, the first ECU120 controls the energization of the pressure-increasing linear control valve 77Rr and the pressure-reducing linear control valve 78Rr so that the control pressure PRr detected by the control pressure sensor 123Rr becomes equal to the rear wheel target hydraulic pressure PRr*.

The second ECU220 comprises a microcomputer as its principal part and has a motor drive circuit, an input/output interface to which various sensor signals are inputted, a drive circuit, a communication interface, etc. All the electromagnetic valves disposed in the second actuator 210 are connected to the second ECU220, and its opening-and-closing status and a divergence are controlled by a solenoid drive signal outputted from the second ECU220. Moreover, the motor 87 which controls the pump 86 is also connected to the second ECU220 and a drive control thereof is carried out by a motor-drive signal outputted from the second ECU220.

Moreover, the second ECU220 is inputted a detection signal outputted from the upstream pressure sensor 125, and detects an upstream pressure P2. A wheel-speed sensor 126, a yaw rate sensor 127, and an acceleration sensor 128 are connected to the second ECU220. The wheel-speed sensor 126 is disposed for each of the wheels WFL, WFR, WRL and WRR, and outputs a pulse signal according to a wheel speed which is a rotational speed of each wheel WFL, WFR, WRL and WRR to the second ECU220. The yaw rate sensor 127 outputs a signal showing a yaw rate of a vehicle to the second ECU220. The acceleration sensor 128 outputs a signal showing acceleration (including deceleration) of the vehicle in a horizontal direction to the second ECU220. The second ECU220 calculates the wheel speed of the wheel W based on the pulse signal which each wheel-speed sensor 126 outputs, and further calculates a vehicle speed (vehicle body speed) based on the four wheel speeds.

The second ECU220 is connected to the CAN communications system through the CAN communication line 300, and is configured so that it can mutually deliver to and receive from the first ECU120, vehicle information, including a vehicle speed, a yaw rate of a vehicle, an acceleration of the vehicle, an existence of a braking demand, failure information and an implementation situation of various controls, etc.

The first ECU120 performs a regeneration coordination brake control which makes the wheel W generate friction braking force in coordination with regenerative braking force generated in the hybrid system 10. This regeneration coordination brake control is a usual brake control carried out when a driver steps on the brake pedal 30. On the other hand, the second ECU220 performs a brake control which operates the second actuator 210 to independently increase and decrease the hydraulic pressure of each of the four wheel cylinder 52 and adjusts the same, only when a necessity arises according to a status of a vehicle. This brake control is referred to as an additional brake control. The second ECU220 performs, as this additional brake control, an antilock control (referred to as ABS) which suppresses a lock of the wheel at the time of braking and secures the stability of the vehicle, a traction control (referred to as TRC) which suppresses a slip of a driving wheel at the time of an acceleration and secures the stability of the vehicle, a vehicle stability control (referred to as VSC) which suppresses a side skid of the vehicle and secures the stability of the vehicle, a brake assist control (referred to as BAC) which assists a brake pedal operation by a driver in an emergency, and an automatic brake control (referred to as ABC) which generates a braking force based on a detection of an obstruction. Moreover, the second ECU220 performs a backup control which increases the hydraulic pressure supplied to the wheel cylinder 52 at the time of a brake pedal operation by a driver to assist a brake pedal operation by the driver when the first hydraulic pressure control unit 100 breaks down and a regeneration coordination brake control cannot be carried out. The second ECU220 stops the energization to the second actuator 210 when it does not perform the additional brake control or the backup control. In this case, the opening-and-closing status of each electromagnetic valve comes to be shown in Fig. 2, and the hydraulic pressure outputted from the first actuator 110 is transmitted to the wheel cylinder 52 as it is.

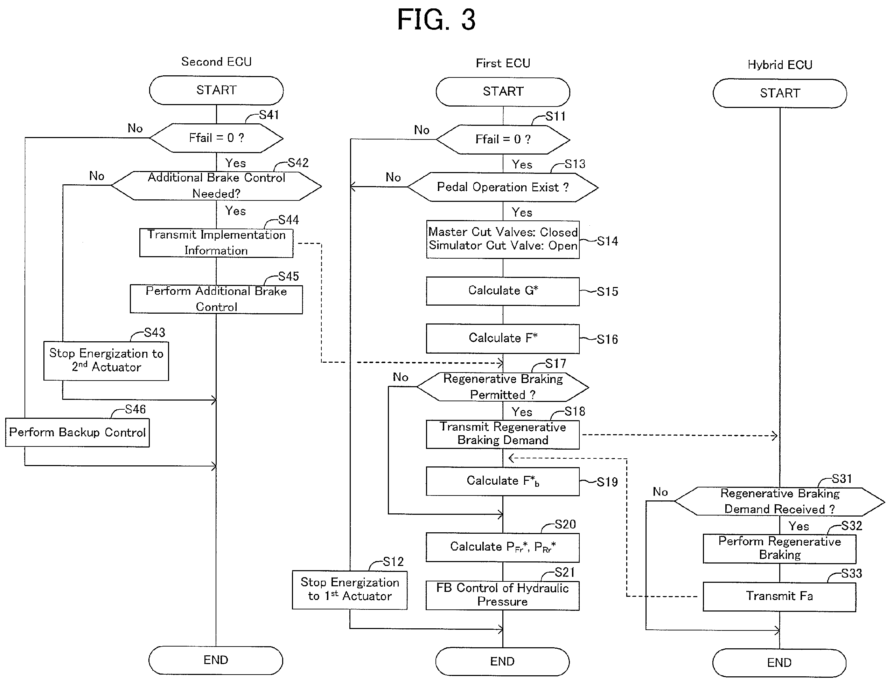

Hereafter, the brake control processing which the first ECU120, the second ECU220 and the hybrid ECU8 carry out will be explained using Fig. 3. The flowchart on the left side in Fig. 3 shows the brake control routine which the second ECU220 carries out, the flowchart of the center in Fig. 3 shows the brake control routine which the first ECU120 carries out, and the flowchart on the right side in Fig. 3 shows the brake control routine which the hybrid ECU8 carries out. Each brake control routine is carried out repeatedly in a predetermined short period.

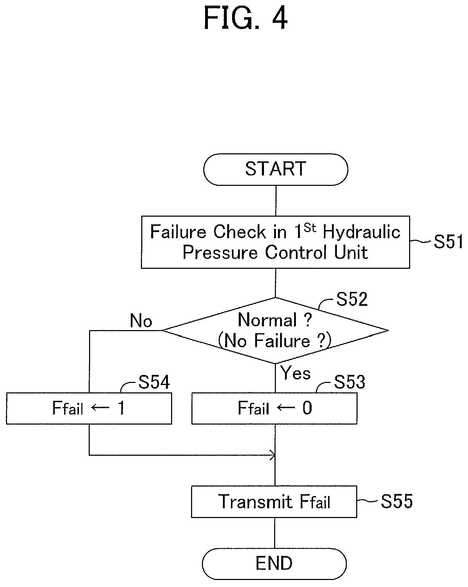

The First ECU120 judges whether a failure judgment flag Ffail is "0" or not in step S11. This failure judgment flag Ffail is set up by the failure judgment flag setting routine shown in Fig. 4, it is set as "1" when a failure in the first hydraulic pressure control unit 100 is detected by first ECU120, and it is set as "0" when a failure is not detected.

Here, the failure judgment flag setting routine will be explained first. In parallel with the brake control routine, the first ECU120 repeatedly performs the failure judgment flag setting routine in a predetermined short period. The first ECU120 checks the existence of a failure in the first hydraulic pressure control unit 100 in step S51. For instance, the first ECU120 carries out a check about a disconnection failure and a short failure in the master cut valves 79Fr and 79Rr, the pressure-increasing linear control valves 77Fr and 77Rr, the pressure-reducing linear control valves 78Fr and 78Rr, and the simulator cut valve 76, and judges that there is a failure when at least one of such failures is detected. Moreover, the first ECU120 carries out a check about whether the detection values outputted from the accumulator pressure sensor 121, the master pressure sensor 122 and the control pressure sensors 123Fr and 123Rr fall within the proper range or not, and judges that there is a failure when at least one sensor whose detection value does not fall within the proper range exists. Moreover, the first ECU120 judges that there is a failure also when the hydraulic fluid at a proper pressure cannot be supplied from the power hydraulic pressure generator 70 (for instance, a failure in the motor 73). Moreover, the first ECU120 judges that there is a failure also when it judges that there is a possibility of a leakage of the hydraulic fluid within the first actuator 110. Moreover, the first ECU120 judges that there is a failure also when a failure within the first ECU120, for instance, a power failure in which a power supply circuit cannot supply a proper electric power to the first actuator 110, is detected.

Then, in step S52, the first ECU120 judges about whether a failure is detected in the first hydraulic pressure control unit 100, sets the failure judgment flag Ffail as "0" in step S53 when a failure is not detected (S52: Yes), and sets the failure judgment flag Ffail as "1" in step S54 when a failure is detected (S52: No). Then, in step S55, the first ECU120 transmits the failure judgment flag Ffail to the second ECU220 through the CAN communication line 300, and once ends the failure judgment flag setting routine.

The first ECU120 performs repeatedly the failure judgment flag setting routine in a predetermined short period. Therefore, the newest failure judgment result is obtained by the failure judgment flag Ffail. In addition, when the microcomputer of the first ECU120 itself breaks down and the failure judgment flag setting routine cannot be carried out, the failure judgment flag Ffail is not set up. In such a case, however, the operation of the first hydraulic pressure control unit 100 not only stops, but the failure judgment flag Ffail is not transmitted to the CAN communication line. Therefore, other ECUs connected to the CAN communications system can judge that the failure judgment flag Ffail is "1" based on the fact the failure judgment flag Ffail is not transmitted.

Now returning to the explanation of the brake control routine (Fig. 3), when the failure judgment flag Ffail is "1" (S11: No), the first ECU120 stops the energization to the first actuator 110 in step S12, and once ends this routine. Then, the treatment mentioned above is repeated in a predetermined short period. Therefore, the master cut valves 79Fr and 79Rr which are the normally-open electromagnetic valves disposed in the first actuator 110 are made into an opened status, and the pressure-increasing linear control valves 77Fr and 77Rr, the pressure-reducing linear control valves 78Fr and 78Rr and the simulator cut valve 76 which are normally-closed electromagnetic valves are made into a closed status. Thereby, the main passages 21 Fr and 21 Rr are opened up, and the hydraulic pressure in the first pressure-increasing chamber 44 and the second pressure-increasing chamber 45 of the master cylinder 42 is outputted to the second actuator 210 as it is.

On the other hand, when the failure judgment flag Ffail is "0", the first ECU120 advances the treatment to step S13. The treatment after this step S13 is a treatment when the first hydraulic pressure control unit 100 is normal. The first ECU120 judges about whether the brake pedal operation is performed by a driver in step S13. For instance, the first ECU120 reads the pedal stroke Sp detected by the stroke sensor 124 and the master pressure Pmas detected by the master pressure sensor 122, and judges that a brake pedal operation is performed, when at least one of a fact that the pedal stroke Sp is larger than the operation judgment threshold value Spref and a fact that the master pressure Pmas is larger than the operation judgment threshold value Pmasref is detected.

The first ECU120 advances the treatment to step S12, when it judges that a brake pedal operation is not performed in step S13. Therefore, such a treatment is repeated until a brake pedal operation is detected. In addition, in a status that a failure of the first hydraulic pressure control unit 100 is not detected, regardless of the existence of a brake pedal operation, the first ECU120 controls the operation of the motor 73 so that the accumulator pressure Pacc falls within a set pressure range.

When a brake pedal operation is detected in step S13, the first ECU120 makes the master cut valves 79Fr and 79Rr into a closed status, and makes the simulator cut valve 76 into an opened status in step S14. Then, in step S15, the first ECU120 calculates a target decelerating G* of a vehicle body based on the pedal stroke Sp detected by the stroke sensor 124 and the master pressure Pmas detected by the master pressure sensor 122. The larger value the target decelerating G* is set as, the larger the pedal stroke Sp is and the larger the master pressure Pmas is. The first ECU120 memorizes a map which represents a correspondence relation between the pedal stroke Sp and the pedal stroke Sp and the target decelerating GS* and a map which represents a correspondence relation between the master pressure Pmas and the target decelerating Gp*, for example. The first ECU120 calculates the target decelerating GS* of a vehicle body by adding a value obtained by the multiplication of a target decelerating GS* computed from the pedal stroke Sp by a weighting coefficient k (0< k<1) to a value obtained by the multiplication of a target decelerating Gp* computed from the master pressure Pmas by a weighting coefficient (1 - k) (G* = k × GS* + (1 - k) × Gp*). This weighting coefficient k is set up so as to be a small value in a range where the pedal stroke Sp is large.

Then, the first ECU120 calculates the target total braking force F* of a wheel set up corresponding to the target decelerating G* in step S16. Then, the first ECU120 judges whether it is in a status that regenerative braking is permitted in step S17. In this case, the first ECU120 judges that it is in a status that regenerative braking is not permitted when it is in the process of any of ABS and VSC being performed by the second hydraulic pressure control unit 200, based on implementation information of the additional brake control transmitted from the second ECU220. As will be mentioned later, the second ECU220 transmits the implementation information showing an implementation situation of the additional brake control to the CAN communication line 300, during implementation thereof. Therefore, the first ECU120 judges whether regenerative braking is permitted or not, based on the implementation information which is transmitted to the CAN communication line 300.

The first ECU120 transmit the regenerative braking demand instruction to the hybrid ECU8 through the CAN communication line 300 when regenerative braking is permitted (S17: Yes). The information showing the target total braking force F* is included in this regenerative braking demand instruction.

The hybrid ECU8 is repeatedly judges whether the regenerative braking demand instruction was transmitted from the first ECU120 in step S31 in a predetermined period. And, when the regenerative braking demand instruction is received, the hybrid ECU8 set up a target regenerative braking force Fa* as close to the total braking force F* as possible up to a ceiling of the target total braking force F*, and operates the motor 2 as a dynamo so as to generate the target regenerative braking force Fa*, in step S32. The electric power generated by the motor 2 is collected in the battery 1 through the inverter 6. In this case, the hybrid ECU8 controls the switching element of the inverter 6 so that the power generation current which flows through the motor 2 follows the current corresponding to the target regenerative braking force Fa*. In step S33, the hybrid ECU8 calculates a regenerative braking force actually generated by the motor 2 (referred to as a actual regenerative braking force Fa) based on the power generation current and power generation voltage of the motor 2, and transmits information which shows the actual regenerative braking force Fa through the CAN communication line 300 to the first ECU120. When the treatment in step S33 is completed, the hybrid ECU8 once ends this routine. And, the treatment mentioned above is repeated in a predetermined operation period.

When the information showing the actual regenerative braking force Fa transmitted from the hybrid ECU8 is received, the first ECU120 calculates a target friction braking force Fb* (= F* - Fa) by subtracting the actual regenerative braking force Fa from the target total braking force F* in step S19. And, in step S20, the first ECU120 distributes this target friction braking force Fb* to front wheel system braking force FbFr* and rear wheel system braking force FbRr* at a predetermined distribution ratio, and calculates front wheel target hydraulic pressure PFr* set up according to the front wheel system braking force FbFr* (front wheel target hydraulic pressure PFr* which can generate the front wheel system braking force FbFr*) and rear wheel target hydraulic pressure PRr* set up according to the rear wheel system braking force FbRr* (rear wheel target hydraulic pressure PRr* which can generate the rear wheel system braking force FbRr*).

On the other hand, in a status that regenerative braking is not permitted (S17: No), the first ECU120 skips treatments in step S18 and S19. For this reason, a regenerative braking demand instruction is not transmitted to the hybrid ECU8. Therefore, since regenerative braking force is not generated, the first ECU120 sets the actual regenerative braking force Fa as zero (Fa = 0) in step S20, and calculates the front wheel target hydraulic pressure PFr* and the rear wheel target hydraulic pressure PRr*.

Then, in step S21, the first ECU120 controls the current flowing through each solenoid of the pressure-increasing linear control valve 77Fr and the pressure-reducing linear control valve 78Fr, by the feedback control of hydraulic pressure, so that the control pressure PFr detected by the control pressure sensor 123Fr becomes equal to the front wheel target hydraulic pressure PFr*. Moreover, the first ECU120 controls the current flowing through each solenoid of the pressure-increasing linear control valve 77Rr and the pressure-reducing linear control valve 78Rr, by the feedback control of hydraulic pressure, so that the control pressure PRr detected by the control pressure sensor 123Rr becomes equal to the rear wheel target hydraulic pressure PRr*. Therefore, from the first actuator 110, the hydraulic pressure controlled to follow the front wheel target hydraulic pressure PFr* is supplied to the main passage 31 Fr of the second actuator 210 through the connection piping 65Fr, and the hydraulic pressure controlled to follow the rear wheel target hydraulic pressure PRr* is supplied to the main passage 31 Rr of the second actuator 210 through the connection piping 65Rr. The first ECU120 once ends this routine when step S21 is processed. And, the treatment mentioned above is repeated at a predetermined operation period.

In step S41, the second ECU220 reads the failure judgment flag Ffail transmitted through the CAN communication line 300, and judges whether the failure judgment flag Ffail is "0." This failure judgment flag Ffail is set as "1" when a failure in the first hydraulic pressure control unit 100 is detected, and it is set as "0" when a failure is not detected. When the failure judgment flag Ffail is "0", the second ECU220 judges about whether it is necessary to carry out an additional brake control in step S42. That is, it judges about whether an ABS implementation condition, a TRC implementation condition, a VSC implementation condition, a BAC implementation condition or an ABC implementation condition are satisfied.

The second ECU220 stops the energization to the second actuator 210 in step S43, when no implementation condition is satisfied (S42: No). Therefore, the main cut valves 81 Fr and 81 Rr, the pressure-increasing valve 83FR, the pressure-increasing valve 83FL, the pressure-increasing valve 83RR, and pressure-increasing valve 83RL are maintained in an opened status, and the pressure-reducing valve 85FR, the pressure-reducing valve 85FL, the pressure-reducing valve 85RR and the pressure-reducing valve 85RL are maintained in a closed status. Moreover, the motor 87 is also maintained in a halt condition. For this reason, the hydraulic pressure supplied to the second actuator 210 from the first actuator 110 through the connection piping 65Fr is supplied to the wheel cylinders 52FR and 52FL of the front wheels as it is, and the hydraulic pressure supplied to the second actuator 210 from the first actuator 110 through the connection piping 65Rr is supplied to the wheel cylinders 52RR and 52RL of the rear wheels as it is. Therefore, during the period when a driver is performing a brake pedal operation, braking force by the regeneration coordination brake control generates in the wheel W. Moreover, during the period when the driver is not performing the brake pedal operation, the wheel cylinders 52FR, 52FL, 52RR and 52RL and the master reservoir 43 communicate, and no braking force generates in the wheel W.

The second ECU220 repeats such a treatment in a predetermined period. And, when the implementation condition for an additional brake control is satisfied (S42: Yes), the implementation information on an additional brake control (implementation information which specifies ABS, TRC, VSC, BAC, or ABC) is transmitted to the first ECU120 through the CAN communication line 300 in step S44.

Then, the second ECU220 carries out the additional brake control in step S45. Hereafter, the additional brake control will be explained. In addition, since various techniques for additional brake controls are known, any technique can be employed.

### <Antilock Control: ABS>

For example, the second ECU220 calculates the slip ratio of each wheel by comparing each wheel speed of the four wheels with the vehicle speed (vehicle body speed), and judges that a wheel is locked and starts ABS when the slip ratio of any one of the wheels exceeds an ABS start judgment threshold value. In this case, the second ECU220 controls the opening and closing of the pressure-increasing valve 83 and the pressure-reducing valve 85 of a target wheel for ABS to temporarily reduce the hydraulic pressure of the wheel cylinder 52 and thereafter return the same to a supply pressure (hydraulic pressure supplied from the first actuator 110). When ABS is carried out, the second ECU220 makes the hydraulic pressure of the wheel cylinder 52 change with a predetermined gradient by controlling the energization of the pressure-increasing valve 83 and the energization of the pressure-reducing valve 85, based on the upstream pressure P2 detected by the upstream pressure sensor 125.

### <Vehicle Stability Attitude Control: VSC>

Moreover, the second ECU220 judges that a vehicle is in a side-skid tendency and starts VSC, for instance, when the deviation between an actual yaw rate and a computational yaw rate supposed to occur exceeds a VSC start judgment threshold value, based on a yaw rate, a wheel speed and the vehicle information (such as steering angle) transmitted to the CAN communication line 300. In this case, the second ECU220 closes the main cut valves 81 Fr and 81 Rr and closes the pressure-increasing valve 83 of a wheel not to be controlled, when a VSC implementation condition is satisfied in a status that a brake pedal operation is performed by a driver. Moreover, the second ECU220 drives the motor 87 to operate the pump 86, and opens and closes the pressure-increasing valve 83 of a wheel to be controlled. Thereby, the difference of braking force between the wheels is generated and a side skid of the vehicle is prevented. On the other hand, when the VSC implementation condition is satisfied in a status that any brake pedal operation is not performed by a driver, the main cut valves 81 Fr and the 81 Rr are closed, and the motor 87 is driven to operate the pump 86. Thereby, the hydraulic pressure pressurized by the pump 86 is supplied to the wheel cylinders 52 of the four wheels through the pressure-increasing valve 83, and a side skid of the vehicle is prevented.

### <Traction Control: TRC>

Moreover, the second ECU220 judges that a driving wheel is slipping and starts TRC when the difference between the wheel speed of a driving wheel and the wheel speed of a coupled driving wheel (driven wheel) exceeds a TRC start judgment threshold value. In this case, the second ECU220 performs the same control as VSC at the time of not braking.

### <Brake Assist Control: BAC>

Moreover, the second ECU220 presumes that a driver performed an urgent brake operation and starts BAC when the extent and its increase rate of the upstream pressure P2 detected by the upstream pressure sensor 125 exceed a BAC start judgment threshold value, respectively. Since a driver may not be able to strongly step on the brake pedal 30 against the will of the driver in an emergency, this BAC assists the brakes operation of the driver in such a case. In this case, the second ECU220 closes the main cut valves 81 Fr and the 81 Rr, drives the motor 87 to operate the pump 86. Thereby, the hydraulic pressure pressurized by the pump 86 is supplied to the wheel cylinders 52 of the four wheels through the pressure-increasing valve 83, and the braking force of the four wheels can be increased. Since the control pressure PFr and the control pressure PRr of the first actuator 110 fall due to the suction of the hydraulic fluid by the pump 86 during the implementation of BAC, a deviation between the front wheel target hydraulic pressure PFr* and the rear wheel target hydraulic pressure PRr* arises accordingly, and the hydraulic fluid from the pressure-increasing linear control valve 77Fr and pressure-increasing linear control valve 77Rr is supplied to the second actuator 210.

### <Automatic Brake Control: ABC>

Moreover, when an obstruction detection signal is inputted from an obstruction judgment ECU (not shown) through the CAN communication line 300, in order to avoid the collision to this obstruction, or in order to reduce collision damage, the second ECU220 starts ABC which is an automatic brake control. The obstruction judgment ECU outputs the obstruction detection signal when it detects an obstruction in the running direction of a vehicle using various kinds of sensors. Fundamentally, ABC is carried out in a status that a brake pedal operation is not performed by a driver. In this case, the second ECU220 closes the main cut valves 81 Fr and the 81 Rr, and drives the motor 87 to operate the pump 86. Thereby, the hydraulic pressure pressurized by the pump 86 is supplied to the wheel cylinders 52 of the four wheels through the pressure-increasing valve 83, and the four wheels can generate braking force.

Thus, the second ECU220 carries out an additional brake control independently of the regeneration coordination brake control which the first ECU120 carries out. When the second ECU220 starts an additional brake control in step S45, it once ends this routine. And, such a treatment is repeated until an additional brake control is completed. The second ECU220 stops the energization to the second actuator 210 after the additional brake control is completed.

### <Backup Control>

The second ECU220 carries out a backup control in step S46 when it judges that the failure judgment flag Ffail is "1" in step S41. When the failure judgment flag Ffail is "1", the operation of the first actuator 110 has been stopped. When the operation of the first actuator 110 has been stopped, the master cut valves 79Fr and 79Rr are maintained in an opened status and the pressure-increasing linear control valves 77Fr and 77Rr and the pressure-reducing linear control valves 78Fr and 78Rr are maintained in a closed status. Therefore, although the hydraulic pressure according to a brake pedal stepping-on force by a driver is outputted from the first actuator 110, this hydraulic pressure is smaller as compared with the hydraulic pressure during an execution of the regeneration coordination brake control. Moreover, regenerative braking force is not acquired, either. Then, the second ECU220 assists braking of a wheel by increasing the hydraulic pressure supplied from the first actuator 110 and supplying the same to each wheel cylinder 52 by means of this backup control.

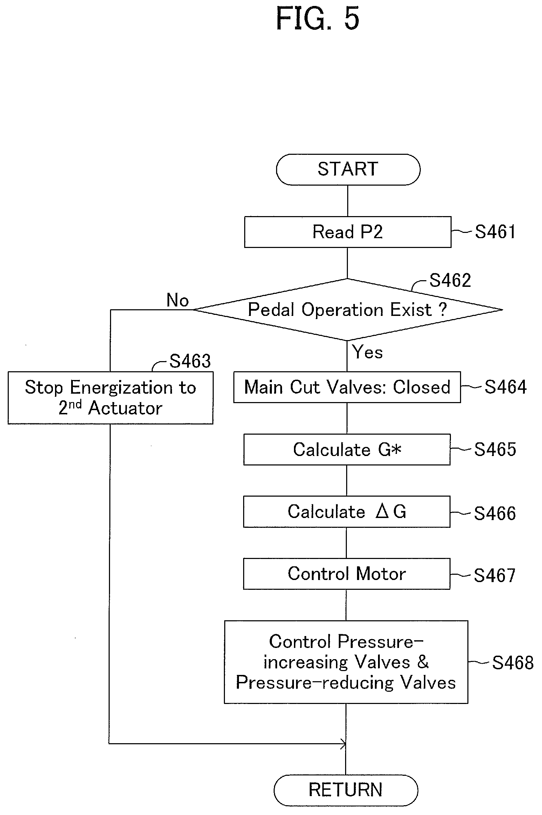

Fig. 5 is a flowchart for showing the routine of the backup control (S46) which the second ECU220 carries out. When the backup control routine starts, the second ECU220 read the upstream pressure P2 detected by the upstream pressure sensor 125 in step S461. In a status that a backup control is carried out, since the master cut valves 79Fr and 79Rr are maintained in an opened status, the upstream pressure P2 becomes a value corresponding to the hydraulic pressure of the first pressure-increasing chamber 44, i.e., a value reflecting the brake pedal stepping-on force by a driver. Then, the second ECU220 judges about whether a brake pedal operation is performed by a driver, based on the upstream pressure P2, in step S462. For instance, when the upstream pressure P2 is larger than an operation judgment threshold value P2ref, it judges that a brake pedal operation is performed.

When it is judged that a brake pedal operation is not performed in step S462, the second ECU220 stops the energization to the second actuator 210 in step S463, and once ends this routine. Therefore, the four wheel cylinders 52 are in a status that they are communicated with the master reservoir 43, and a braking force does not generate in a wheel. On the other hand, when it is judged that a brake pedal operation is performed in step S462, the second ECU220 closes the main cut valves 81 Fr and 81 Rr in step S464. Then, the second ECU220 calculates the target decelerating G* set up according to the upstream pressure P2 in step S465. The second ECU220 memorizes a map in which the larger the upstream pressure P2 becomes, the larger the extent (absolute value) of the target decelerating G* becomes, and sets up the target decelerating G* with reference to this map.

Then, in step S466, the second ECU220 acquires an actual deceleration G which is a time differential value of a vehicle speed calculated from a wheel speed or an actual deceleration G in a front-back direction of a vehicle detected by the acceleration sensor 128, and calculates a deviation ΔG (= G*-G) between the target decelerating G* and the actual deceleration G. In addition, the values in a deceleration direction of the target decelerating G* and the actual deceleration G are treated as positive values here. Then, in step S467, the second ECU220 drives the motor 87 with a drive amount set up according to this deviation ΔG to operate the pump 86. The larger the deviation ΔG is, the larger this drive amount is set as. Then, in step S468, the second ECU220 controls the opening-and-closing status of the four pressure-increasing valves 83 and the four pressure-reducing valves 85 based on the deviation ΔG.

For instance, a pressure-increasing mode is chosen when the deviation ΔG is larger than a predetermined positive pressure-increasing threshold value, a pressure-reducing mode is chosen when the deviation ΔG is smaller than a predetermined negative pressure-reducing threshold value, and a hold mode is chosen when the deviation ΔG is the negative pressure-reducing threshold value or more and the positive pressure-increasing threshold value or less. When the pressure-increasing mode is chosen, all the four pressure-increasing valves 83 are made into an opened status, and all the four pressure-reducing valves 85 are made into a closed status. Therefore, the hydraulic pressure of the hydraulic fluid pressurized by the pump 86 is supplied to each wheel cylinder 52 through the individual passage 32. When the pressure-reducing mode is chosen, all the four pressure-increasing valves 83 are made into a closed status, and all the four pressure-reducing valves 85 are made into an opened status. Therefore, each wheel cylinder 52 is respectively communicated to the pressure control reservoir 88 through the individual reservoir passage 33, and the hydraulic pressure in the wheel cylinder 52 falls. When the hold mode is chosen, all the four pressure-increasing valves 83 and all the four pressure-reducing valves 85 are made into a closed status. Therefore, the hydraulic pressure in each wheel cylinder 52 is held.

The second ECU220 once ends this routine, when step S468 is processed. And the same treatment is repeated in a predetermined short period. Thereby, even when the first hydraulic pressure control unit 100 is out of order, the hydraulic pressure according to a brake operation by a driver can be supplied independently to the wheel cylinders 52FR and 52FL in a front wheel system and the wheel cylinders 52RR and 52RL in a rear wheel system. Therefore, the brake operation force by a driver can be assisted and the load of the driver can be reduced. Moreover, since it is possible to adjust the passage properties of the second actuator 210 in the front wheel system and the rear wheel system independently from each other, the friction braking force generated in the front wheel and the friction braking force generated in the rear wheel can be set at a predetermined distribution ratio.

In accordance with the brake apparatus according to the present embodiment explained above, the following effect is achieved.
1. Since the first ECU120 and the second ECU220 are connected in a communicable manner, even when a failure occurs in the first hydraulic pressure control unit 100, the second ECU220 can detect the failure.
2. When a failure in the first hydraulic pressure control unit 100 is detected, the second ECU220 carries out a backup control and supplies the hydraulic pressure pressurized by the pump 86 independently to the wheel cylinders 52FR and 52FL in a front wheel system and the wheel cylinders 52RR and 52RL in a rear wheel system. Thereby, the braking force of each wheel can be increased properly. As a result, brake operation force by a driver can be reduced properly and a vehicle can be stopped safely.
3. Since a backup control is carried out using the second actuator 210 which has pressure-increasing and pressure-reducing functions of hydraulic fluid, no parts for exclusive use as a measure against a failure, etc. are needed newly. Therefore, in the points of cost, volume and weight, it is effective. Moreover, a servo function can be given to all the four wheels. For instance, a brake apparatus used for a conventionally known hybrid vehicle comprises an integrated actuator which performs both a regeneration coordination brake control and an additional brake control and a hydraulic pressure control unit which comprises one ECU for controlling the integral-type actuator exclusive for a hybrid vehicle. In order to use this hydraulic pressure control unit, as a measure against a failure, it is necessary to make electronic components, such as a microcomputer and integrated circuit, redundant or to establish a mechanical backup mechanism. In the former case, a servo function for all the four wheels cannot be achieved since a braking system is divided and the servo function is given only to a part of the braking system. In the latter case, it is disadvantageous in the point of cost, volume and weight. On the contrary, in accordance with the present embodiment, such problems can be solved since a backup control is performed using the second actuator 210.
4. Since the first hydraulic pressure control unit 100 which performs a regeneration coordination brake control and the second hydraulic pressure control unit 200 which performs an additional brake control are disposed separately and independently from each other, general versatility of each control unit is high. The optimal valve properties (diameter of an orifice and responsivity to current) for carrying out pressure control of the hydraulic fluid in a regeneration coordination brake control differs from the optimal valve properties (diameter of an orifice and responsivity to current) in an additional brake control such as an ABS etc. Moreover, the optimal valve properties differ depending on a vehicle weight. For this reason, only limited types of vehicles can mount the above-mentioned integrated actuator. On the contrary, the present embodiment can be applied to various vehicles (vehicle weights) by selectively combining the first hydraulic pressure control unit 100 which is specialized to the regeneration coordination brake control and the second hydraulic pressure control unit 200 which is specialized to the additional brake control according to vehicle properties. Moreover, not by the unit, the actuators 110 and 210 or the ECU120 and ECU220 can be properly combined as one unit. Moreover, since the second actuator 210 applied to a vehicle which do not perform the regenerative braking can be diverted as it is, and no modification on hardware for mounting on a hybrid vehicle is unnecessary. Moreover, the existing master cylinder unit 40 can be also diverted as it is.
5. Since the first ECU120 is configured so as to take charge of the operational treatment concerning a regeneration coordination brake control and the second ECU220 is configured so as to take charge of the operational treatment concerning an additional brake control, the operational burden of the microcomputer in each of the ECU120 and ECU220 can be reduced. For instance, since the second ECU220 is configured so as to perform an operational treatment of a wheel speed, whose operational burden is large, the first ECU120 does not need to perform an operational treatment of a wheel speed, and can devote the reduced operational burden to the operational treatment concerning a regeneration coordination brake control. For this reason, the operational period in a regeneration coordination brake control (an operational period of a sensor value and an operation period of a control instruction value for an electromagnetic valve, etc.) can be shortened, and a highly precise hydraulic pressure control can be carried out.
6. The second ECU220 performs a backup control based on the upstream pressure P2 detected by the upstream pressure sensor 125 disposed in the second actuator 210. For this reason, the second hydraulic pressure control unit 200 by itself can detect the amount of a brake operation by a driver and carry out a backup control.
7. Since the hybrid ECU8 does not carry out a regenerative braking at the time of an execution of ABS or VSC, the control thereof is not interfered with regenerative braking force. Thereby, the stability of a vehicle can be maintained successfully.

### <Modification 1>

Next, a modification of the embodiment mentioned above will be explained. Although a brake pedal operation by a driver is detected based on the upstream pressure P2 detected by the upstream pressure sensor 125 when a backup control is performed in the above-mentioned embodiment, since the upstream pressure P2 rises after the brake pedal 30 is stepped on to some extent, a control delay occurs, and it can be supposed that a feeling of strangeness is given to a driver. Then, in this modification, a detection signal of the stroke sensor 124 which detects the amount of stepping-on of the brake pedal 30 is supplied not only to the first ECU120, but also to the second ECU220.

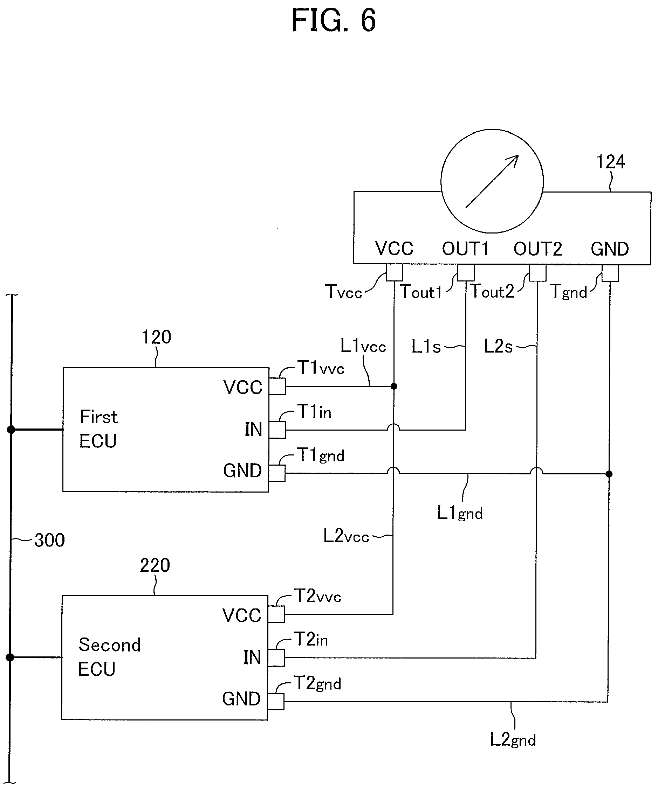

As shown in Fig. 6, the stroke sensor 124 comprises a first output terminal Tout1, a second output terminal Tout2, a power supply terminal Tvcc and an earth terminal Tgnd. The stroke sensor 124 comprises two sensor elements in its interior, a detection signal from one sensor element is outputted from the first output terminal Tout1, and a detection signal from the other sensor element is outputted from the second output terminal Tout2. When the two sensor elements are normal, the output signal from the first output terminal Tout1 and the output signal from the second output terminal Tout2 (voltage signals) are identical.

The first ECU120 comprises a power supply terminal T1vcc for feeding power supply to the stroke sensor 124, an earth terminal T1 gnd and an input terminal T1 in to which a detection signal from the stroke sensor 124 is inputted. Moreover, similarly, the second ECU220 comprises a power supply terminal T2vcc for feeding power supply to the stroke sensor 124, an earth terminal T2gnd and an input terminal T2in to which a detection signal from the stroke sensor 124 is inputted. The power supply terminal Tvcc of the stroke sensor 124 is connected to the power supply terminal T1vcc of the first ECU120 through a first power supply line L1vcc, and is connected to the power supply terminal T2vcc of the second ECU220 through a second power supply line L2vcc. Moreover, the earth terminal Tgnd of the stroke sensor 124 is connected to the earth terminal T1gnd of the first ECU120 through a first earth line L1gnd, and is connected to the earth terminal T2gnd of the second ECU220 through a second earth line L2gnd. Therefore, power supply is fed to the stroke sensor 124 in parallel from the first ECU120 and the second ECU220. For this reason, even if one power supply line L1vcc (L2vcc) or earth line L1gnd (L2gnd) is disconnected, power supply to the stroke sensor 124 can be maintained.

Moreover, the first output terminal Tout1 of the stroke sensor 124 is connected to the input terminal T1 in of the first ECU120 through the first detection line L1s, and the second output terminal Tout2 of the stroke sensor 124 is connected to the input terminal T2in of the second ECU220 through the second detection line L2s. Therefore, the stroke sensor 124 outputs a detection signal from one sensor element to the first ECU120, and outputs a detection signal from the other sensor element to the second ECU220.

Since the stroke sensor 124 conventionally comprises two output terminals Tout1 and Tout2, in accordance with this modification 1, a detection signal can be outputted to the first ECU120 and the second ECU220 by effectively using the output terminals Tout1 and Tout2. Therefore, also in the second ECU220, a brake pedal operation by a driver can be detected by using the detection signal from the stroke sensor 124. For instance, based on a pedal stroke in place of the upstream pressure sensor 125, the existence of a brake pedal operation can be judged (S462) and the calculation of the target decelerating G* can be performed (S465). For this reason, even when the first hydraulic pressure control unit 100 breaks down, a backup control can be carried out successfully, a change of a pedal operation feeling can be reduced to make it difficult for a feeling of strangeness to be given to a driver. Moreover, a calculation of the target decelerating G* may be performed (S465) by combining the upstream pressure P2 detected by the upstream pressure sensor 125 and the stroke Sp detected by the stroke sensor 124.

Moreover, the first ECU120 and the second ECU220 can acquire two detection values of the stroke sensor 124 by communicating mutually using a CAN communication system. Therefore, the first ECU120 (or the second ECU220) can perform a failure judgment of the stroke sensor 124 by comparing the two detection values. For instance, the first ECU120 (or the second ECU220) computes ΔSp (= |Sp1 - Sp2|), which is a deviation between the detection values Sp1 and Sp2, and judges that there is a failure in the stroke sensor 124 when a status that this deviation ΔSp is larger than a failure judgment threshold value ΔSpref continues for a failure judgment period or more. This failure judgment period is set up in consideration of a time period (communication delay time) which is necessary to acquire information using a CAN communication system.

### <Modification 2>

In a case of a configuration wherein the first ECU120 and the second ECU220 feed a power supply in parallel to the stroke sensor 124 like the above-mentioned modification 1, even if one power supply line L1vcc (L2vcc) or earth line L1gnd (L2gnd) is disconnected, the disconnection of the power supply line L1vcc (L2vcc) or earth line L1gnd (L2gnd) cannot be detected since a normal detection signal (voltage signal) will be outputted from the output terminals Tout1 and Tout2 of the stroke sensor 124 when the other power supply line L2vcc (L1vcc) or earth line L2gnd (L1gnd) is normal. In this modification 2, a disconnection detection function is further improved in the configuration of the modification 1. Hereafter, the power supply line L1vcc (L2vcc) and the earth line L1gnd (L2gnd) are collectively referred to as a power supply connection line.

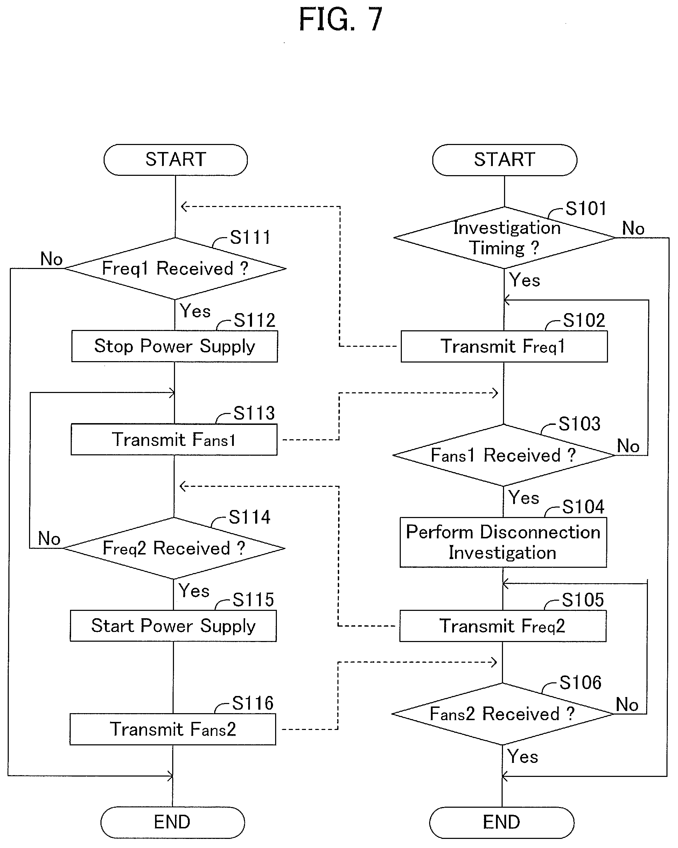

Fig. 7 shows disconnection investigation routine which the first ECU120 and the second ECU220 collaboratively carry out. The disconnection investigation routine is repeatedly carried out in a predetermined period. The first ECU120 and the second ECU220 judge whether it is disconnection investigation timing in step S101. This disconnection investigation timing is set up for the first ECU120 and the second ECU220 differently. The first ECU120 and the second ECU220 once end this routine when they judge that it is not disconnection investigation timing. Such a treatment is repeated, and when disconnection investigation timing comes in one ECU, the ECU will carry out the treatment from step S102. Here, a case where the one ECU is the first ECU120 will be explained. In this case, the second ECU220 which is the other ECU will carry out the treatment on the left side in the figure. In addition, when the one ECU is the second ECU220, the second ECU220 will carry out the treatment on the right side in Fig. 7, and the first ECU120 will carry out the treatment on the left side in Fig. 7.

The first ECU120 transmits a power supply stop demand flag Freq1 through the CAN communication line 300 to the second ECU220 in step S102. The second ECU220 judges whether the power supply stop demand flag Freq1 is received in step S111, and once ends this routine when the power supply stop demand flag Freq1 is not received. The second ECU220 repeats such a treatment, and when it receives the power supply stop demand flag Freq1 (S111: Yes), it stops a power supply to the stroke sensor 124 in step S112, and it transmits a power supply stop implementation flag Fans1 to the first ECU120 in step S113.

The first ECU120 keeps on transmitting the power supply stop demand flag Freq1 until it receives the power supply stop implementation flag Fans1 from the second ECU220 through the CAN communication line 300 in step S103, and when it receives the power supply stop implementation flag Fans1, it will carry out a disconnection investigation of the power supply connection line of the stroke sensor 124 in step S104. In this status, the power supply is fed to the stroke sensor 124 only from the first ECU120. Therefore, in a case where any of the first power-supply line L1vcc and the first earth line L1gnd through which a power supply is fed from the first ECU120 to the stroke sensor 124 is disconnected, when the second ECU220 stops a power supply to the stroke sensor 124, a detection signal (voltage level of the detection signal over an earth potential) outputted from the stroke sensor 124 to the first ECU120 departs from a proper range. On the other hand, when both the first power supply line L1vcc and the first earth line L1gnd are not disconnected, the detection signal outputted from the stroke sensor 124 to the first ECU120 falls within the proper range. By using this, the first ECU120 detects an electric potential of the input terminal T1 in over an electric potential of the earth terminal T1 gnd (hereafter, referred to as a voltage of the input terminal T1 in), and judges the existence of disconnection in the first power supply line L1vcc and the first earth line L1gnd based on whether this voltage of the input terminal T1 in falls within the proper range.

When the disconnection investigation is completed, the first ECU120 will transmit a power supply stop release flag Freq2 to the second ECU220 through the CAN communication line 300 in step S105. The second ECU220 judges whether it receives the power supply stop release flag Freq2 in step S114, and returns the treatment to step S113 until it receives the power supply stop release flag Freq2. When the second ECU220 receives the power supply stop release flag Freq2, it will start feeding the power supply to the stroke sensor 124 in step S115, transmits a power supply start flag Fans2 to the first ECU120 through the CAN communication line 300, and once ends this routine.

In step S106, the first ECU120 judges whether the power supply start flag Fans2 is received, and when the power supply start flag Fans2 is received, it will once end this routine.

In accordance with the second modification explained above, in addition to the effect of the first modification, a disconnection of the stroke sensor 124 can be inspected successfully.

### <Modification 3>

When the first ECU120 and the second ECU220 are connected in a communicable manner using a CAN communications system, a mutual surveillance can be performed by delivering and receiving information between the first ECU120 and the second ECU220. However, when the communication between the two ECUs stops, it cannot be distinguished whether the cause is due to the trouble of the CAN communication or an operation stop (system breakdown) of the other ECU which serves as a communication partner. Moreover, fail-safe treatments differ between a case where a trouble occurs in the CAN communication and a case where the operation of the other ECU is stopped. Then, in this modification 3, in the configuration of the modification 1 or the modification 2, when a blackout of a CAN communication is detected, its cause is distinguished using the detection signal of the stroke sensor 124.

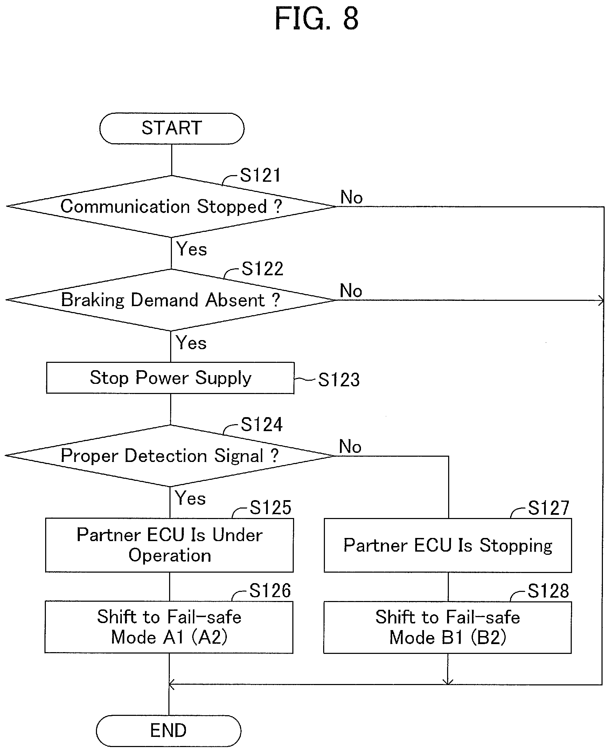

Fig. 8 shows a communication error cause distinguishing routine which the first ECU120 and the second ECU220 carry out. The communication error cause distinguishing routine is carried out in a predetermined period. Although a treatment which the first ECU120 carries out will be explained here, a treatment which the second ECU220 carries out is the same as that the first ECU120 carries out. In step S121, the first ECU120 judges whether the CAN communication with the second ECU220 which is a communication partner has been stopped. The first ECU120 once ends this routine when the CAN communication has not been stopped. On the other hand, when the CAN communication has been stopped, (S121: Yes), the first ECU120 judges whether a braking demand has not occurred in step S122. That is, it judges whether a brake pedal operation by a driver is not performed. In addition, when the second ECU220 carries out step S122, it is judged about whether a demand for an additional brake control has not been occurred.

The first ECU120 once ends this routine when the braking demand has occurred. When the braking demand has not occurred, the first ECU120 stops a power supply to the stroke sensor 124 in step S123. Then, in step S124, the first ECU120 reads the voltage of the input terminal T1 in, i.e., the voltage of the detection signal of the stroke sensor 124, and judges whether the voltage falls within the proper range. Since the stroke sensor 124 has received a power supply from the second ECU220 when the second ECU220 is operating normally, even if a power supply from the first ECU120 is stopped, it outputs a proper detection signal. On the other hand, when the second ECU220 stops its operation, since the stroke sensor 124 cannot receive the power supply feeding from second ECU220, it becomes impossible for the stroke sensor 124 to output a proper detection signal even if the power supply from the first ECU120 is stopped. By using this, the first ECU120 reads the voltage of the detection signal which the stroke sensor 124 outputs in step S124, and it will judge that the second ECU220 which is a communication partner is under operation, in step S125, when the voltage of a detection signal is within a proper range. That is, the first ECU120 judges that the cause for a communication with the second ECU220 to be impossible is due to a trouble of a CAN communication. In this case, in step S126, the first ECU120 shifts the brake control mode to a fail-safe mode A1, and ends this routine.

On the other hand, when the voltage of the detection signal of the stroke sensor does not fall within the proper range (S124: No), the first ECU120 judges that the operation of the second ECU220 which is a communication partner is under suspension in step S127. That is, it is judged that the cause for a communication with the second ECU220 to be impossible is the operation stop of the second ECU220. In this case, in step S128, the first ECU120 shifts the brake control mode to a fail-safe mode B1, and ends this routine.

Although the second ECU220 also performs the communication error cause distinguishing routine similarly to the first ECU120, in this case, when the second ECU220 judges as "Yes" in step S124, it judges that the first ECU120 which is a communication partner is under operation, in step S125. That is, the second ECU220 judges that the cause for a communication with the first ECU120 to be impossible is a trouble of a CAN communication. In this case, in step S126, the second ECU220 shifts the brake control mode to a fail-safe mode A2, and ends this routine. Moreover, when the second ECU220 judges as "No" in step S124, it judges that the operation of the first ECU120 which is a communication partner is under suspension, in step S127. In this case, in step S128, the second ECU220 shifts the brake control mode to a fail-safe mode B2, and once ends this routine.

When the first ECU120 shifts to the fail-safe mode A1, and when the second ECU220 shifts to the fail-safe mode A2, although the first ECU120 and the second ECU220 cannot communicate mutually in both cases, each ECU is operated normally. Then, the first ECU120 generates braking force at a wheel only by a hydraulic pressure control, without transmitting a regenerative braking demand to the hybrid ECU8, when the brake control mode is shifted to the fail-safe mode A1. In this case, the first ECU120 sets, as the target friction braking force Fb*, the value of the target total braking force F* as it is. Moreover, the second ECU220 carries out only controls irrelevant to a regeneration coordination brake control among additional brake controls, when the brake control mode is shifted to the fail-safe mode A2. In the present embodiment, since it is forbidden that a regeneration coordination brake control is performed simultaneously with ABS or VSC among additional brake controls, the second ECU220 forbids ABS and VSC, when the brake control mode is shifted to the fail-safe mode A2. In addition, in case of the trouble of a CAN communication, since the first ECU120 does not shift to the fail-safe mode A1 to transmit a regenerative braking demand, the second ECU220 may carry out all additional control modes even when the brake control mode is shifted to the fail-safe mode A2.

On the other hand, a case where the first ECU120 shifts to the fail-safe mode B1 is a case where the operation of the second ECU220 is stopped, and a case where the second ECU220 shifts to the fail-safe mode B2 is a case where the operation of the first ECU120 is stopped. Then, the first ECU120 makes a wheel generate a braking force only by a hydraulic pressure control without transmitting a regenerative braking demand to the hybrid ECU8 like the fail-safe mode A1, when it shifts to the fail-safe mode B1. Moreover, the second ECU220 carries out the above-mentioned backup control, when it shifts to the fail-safe mode B2. That is, instead of the first hydraulic pressure control unit 100, it increases the hydraulic pressure supplied from the master cylinder 42, and supplies the same to a wheel cylinder.

In accordance with the third modification explained above, in addition to the effects of the first modification and the second modification, when the communication between the two ECUs stops, it can be distinguished whether the cause is due to a trouble of the CAN communication or an operation stop of the other ECU which serves as a communication partner. Therefore, a suitable treatment according to the discrimination result of the cause can be carried out.

As mentioned above, although the brake apparatus according to the embodiments and the modifications were explained, the present invention is not limited to the above-mentioned embodiments and modifications, and unless it deviates from the objective of the present invention, various modifications are possible.

Although the brake apparatus according to the present embodiment is applied to a front-wheel-drive-type hybrid vehicle, for instance, it may be applied to a rear- wheel-drive-type vehicle or a four-wheel-drive-type hybrid vehicle. Moreover, it is also applicable to an electric vehicle which comprises only a motor as a power source for vehicle running (which does not have an internal-combustion engine). That is, the present invention can be applied to any vehicles which can generate regenerative braking force by a motor.

Moreover, as additional brake controls, it is not necessary to perform all the additional brake controls shown in the embodiments, and any of them may be carried out.

Moreover, in the present embodiment, although the second ECU220 carries out only a backup control when the failure judgment flag Ffail is set to "1", it may be configured so as to carry out any of other additional brake controls (for instance, automatic brake), in addition to a backup control.

Moreover, in the present embodiment, although the communication between the first ECU120 and the second ECU220 is performed using the CAN communication line 300, the CAN communication line 300 may be replaced with a communication line for exclusive use.

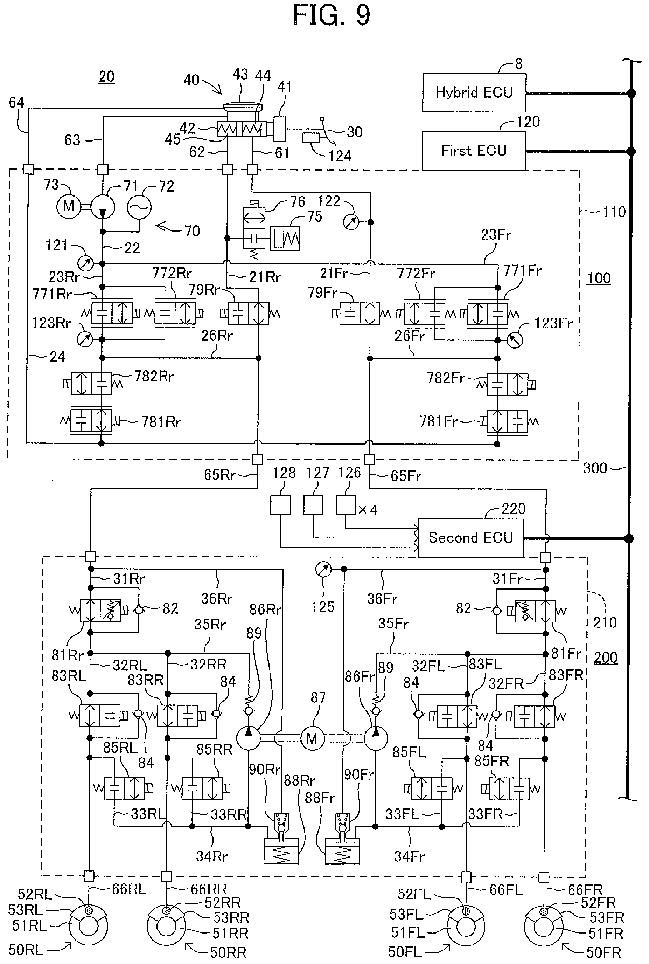

Moreover, also as for the configurations of hydraulic pressure circuits of the first actuator 110 and the second actuator 210, for example, the location of an electromagnetic valve, the type (a normally-closed type or a normally-open type) of an electromagnetic valve, the number of an electromagnetic valve, the location of a pressure sensor, etc. can be changed arbitrarily. In the present embodiment, although the pressure-reducing linear control valves 78Fr and 78Rr of the first actuator 110 are normally-closed type, vibration is easily generated when a brake pedal operation is released, in a case where a normally-closed type linear control valve is used. Then, as shown in Fig. 9, the normally-open type pressure-reducing linear control valves 781 Fr and 781 Rr may be used in order to reduce vibration. In this case, it preferable that the normally-closed type electromagnetic on-off valves 782Fr and 782Rr are disposed in series with the normally-open type pressure-reducing linear control valves 781 Fr and 781 Rr.

Moreover, as shown in Fig. 9, a pressure-increasing linear control valve 771 Fr and a second pressure-increasing linear control valve 772Frmay be disposed in parallel in the branch hydraulic pressure source passage 23Fr, and a first pressure-increasing linear control valve 771 Rr and a second pressure-increasing linear control valve 772Rr may be disposed in parallel in the branch hydraulic pressure source passage 23Rr, and thereby their durability may be improved.

Moreover, as shown in Fig. 9, a stroke simulator 75 may be disposed in the main passage 21 Rr, in place of the main passage 21 Fr. Moreover, also as for the master pressure sensor 122 may be disposed in any one or both of the main passage 21 Fr and the main passage 21 Rr, as long as it is upstream side rather than the master cut valve 79.

## Claims

1. A brake apparatus applied to a vehicle comprising a regenerative braking device to generate regenerative braking force by converting a kinetic energy of a rotating wheel into an electrical energy and collecting the electrical energy to a battery comprises:
a master cylinder which outputs a hydraulic pressure of a hydraulic fluid according to a brake operation by a driver,
a wheel cylinder which is disposed for each wheel and operates a friction member with the hydraulic pressure of the hydraulic fluid to generate friction braking force,
a first hydraulic pressure controller having a first actuator which is disposed in a passage of the hydraulic fluid between said master cylinder and said wheel cylinder and can adjust the hydraulic pressure supplied to said wheel cylinder and a first electrical control unit which controls an operation of said first actuator so that said first actuator outputs a hydraulic pressure which can generate target friction braking force obtained by subtracting a regenerative braking force generated by said regenerative braking device from target total braking force set up according to the amount of a brake operation,
a second hydraulic pressure controller having a second actuator which is disposed in a passage of the hydraulic fluid between said first actuator and said wheel cylinder and can fluctuate the hydraulic pressure of said wheel cylinder and a second electrical control unit which operates said second actuator and individually controls the hydraulic pressure of each wheel cylinder so as to maintain a stability of the vehicle when the stability of the vehicle needs to be maintained, and
a communication connection means to connect said first electrical control unit and said second electrical control unit so that they can communicate each other,
wherein:
said second electrical control unit comprises:
a failure detection means to detect a failure of said first hydraulic pressure controller through said communication connection means, and
a backup means to operate said second actuator according to said amount of the brake operation to assist braking of said wheel when the failure of said first hydraulic pressure controller is detected.

2. The brake apparatus according to Claim 1, wherein:
said second actuator comprises a pressure sensor which detects the hydraulic pressure outputted from said first actuator, and
said backup means operates said second actuator based on the hydraulic pressure detected by said pressure sensor to assist braking of said wheel.

3. The brake apparatus according to Claim 1 or 2, comprising a stroke sensor which detects the stroke of a brake pedal that the driver operates, wherein:
said stroke sensor outputs a detection signal to said first electrical control unit and said second electrical control unit, and is provided with a power supply from said first electrical control unit and said second electrical control unit.

4. The brake apparatus according to Claim 3, wherein:
said stroke sensor has two sensor elements which detect said stroke and two signal output terminals which output the detection signal of each sensor element, and
one of the output terminals is electrically connected to said first electrical control unit, and the other one of the signal output terminals is electrically connected to said second electrical control unit.

5. The brake apparatus according to Claim 3 or 4, comprising:
a power feeding control means which temporarily stops a power supply from either one of said first electrical control unit and said second electrical control unit to said stroke sensor, and
a disconnection investigation means which conducts a disconnection investigation of a power supply connection line for feeding a power supply from the other one of said electrical control units to said stroke sensor based on a detection signal inputted into said other one of said electrical control units, in a status that the power supply from one of said electrical control units to said stroke sensor has been stopped.

6. The brake apparatus according to any one of Claim 3 to Claim 5, comprising:
a power feeding control means for an incommunicable situation, which temporarily stops a power supply from either one of said first electrical control unit and said second electrical control unit to said stroke sensor when a communication between said first electrical control unit and said second electrical control unit becomes impossible, and
an operation stop judgment means which judges whether the operation of the other one of said electrical control units has stopped based on a detection signal inputted into the one of said electrical control units in a status that the power supply from the one of said electrical control units to said stroke sensor has been stopped.
